(19) Europäisches Patentamt
European Patent Office
Office européen des brevets

(11) EP 1 001 153 B1

(12) **EUROPEAN PATENT SPECIFICATION**

(45) Date of publication and mention of the grant of the patent:
**05.03.2003 Bulletin 2003/10**

(51) Int Cl.7: **F02D 41/38**, F02D 21/08, F02D 41/10, F02D 41/14

(21) Application number: **99122021.1**

(22) Date of filing: **12.11.1999**

(54) **Control system for direct injection engine**

Steuerverfahren für eine Brennkraftmaschine mit Direkteinspritzung

Méthode de commande pour moteur à injection directe

(84) Designated Contracting States:
**DE ES FR GB IT**

(30) Priority: **12.11.1998 JP 32156698**

(43) Date of publication of application:
**17.05.2000 Bulletin 2000/20**

(73) Proprietor: **Mazda Motor Corporation**
**Aki-gun, Hiroshima 730-8670 (JP)**

(72) Inventors:
- **Saito, Tomoaki**
  **Aki-gun, Hiroshima 730-8670 (JP)**
- **Yasutomi, Katsuaki**
  **Aki-gun, Hiroshima 730-8670 (JP)**
- **Hosoya, Hideki**
  **Aki-gun, Hiroshima 730-8670 (JP)**
- **Araki, Keiji**
  **Aki-gun, Hiroshima 730-8670 (JP)**

(74) Representative: **Müller-Boré & Partner**
**Patentanwälte**
**Grafinger Strasse 2**
**81671 München (DE)**

(56) References cited:
**EP-A- 0 887 525**
**DE-A- 4 415 826**
**US-A- 5 682 864**

- **PATENT ABSTRACTS OF JAPAN vol. 013, no. 538 (M-900), 30 November 1989 (1989-11-30) & JP 01 219338 A (MAZDA MOTOR CORP), 1 September 1989 (1989-09-01)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 001 153 B1

## Description

The present invention relates to a fuel injection control system for a direct injection type of engine in which fuel is directly delivered into cylinders of the engine and, more particularly, to a direct injection engine fuel injection control system for lowering levels of harmful emissions in exhaust gas from the engine.

Typically, as an engine control system for direct injection engines of this kind, there has been known from, for example, Japanese Unexamined Patent Publication No. 8-144867, an air-to-fuel ratio control system which controls indirectly an air-to-fuel ratio (or an excess air ratio) in a combustion chamber of a diesel engine by regulating the quantity of exhaust gas that is recirculated into an intake air stream. This air-to-fuel control system, which includes an exhaust gas recirculation passage (EGR passage) through which exhaust gas is partly admitted into an intake system and an actuator operated exhaust gas recirculation valve (EGR valve) operative to regulate the quantity of exhaust gas that flows through the EGR passage, controls an opening or a valve lift of the EGR valve in accordance with an air-to-fuel ratio in the combustion chamber that is detected by means of an air-to-fuel ratio sensor. In the light of characteristics of the diesel engine that while the quantity of NOx emissions is controlled to become smaller with a decline in the air-to-fuel ratio in the combustion chamber and a sharp quantitative increase of smoke occurs if the air-to-fuel ratio is too low, the prior art air-to-fuel control system realizes a quantitative reduction of NOx emissions and smoke in exhaust gas by setting a target air-to-fuel ratio as low as possible within an extent where no sharp quantitative increase of smoke occurs.

In recent years, in view of the protection of environment, there is a strong demand for purification of exhaust gases on automobile engines. In the case of diesel engines and lean burn gasoline engines, in particular, since it is difficult to reduce and convert NOx emissions in the exhaust gases that contain oxygen in excess, it is requested to cause a decline in generation of NOx itself from combustion. Nevertheless, because the diesel engine generates exhaust at high temperature from furious combustion which is caused as a result of supply of a large quantity of fuel in an engine operating region of higher than moderate engine loads and an accelerative drive state where the diesel engine is demanded to provide high output, it is exceedingly difficult to cause a decline in NOx generation more efficiently in these engine operating regions. It is thought to be effective in causing a decline in NOx generation to control sharp development of combustion by retarding a timing of fuel injection in the engine operating region of more than moderate engine loads as compared with that in an engine operating region of lower engine loads. The retarding of fuel injection timing possibly causes a sharp quantitative increase of smoke due to slow combustion, which is the cause of generation of heavy black smoke.

It is therefore an object of the invention to accomplish a significant quantitative reduction of both NOx emissions and smoke in exhaust gas from a diesel engine and a direct injection-spark ignition type of gasoline engine by improving fuel combustion through a contrivance of fuel injection.

The foregoing object of the invention is achieved by a fuel injection control system for an engine which performs multi-split fuel injection, which refers to fuel injection split into a plurality of parts, in a combustion stroke of a combustion cycle of each cylinder while the engine operates in an engine operating region where it is difficult to provide a quantitative reduction of both NOx emissions and smoke.

According to an embodiment of the present invention, in the fuel injection control system for a direct injection engine which is equipped with fuel injectors operative to deliver fuel into combustion chambers of the cylinders, respectively, an exhaust gas recirculation passage through which exhaust gas is partly admitted into an intake air stream in an intake passage, an exhaust gas recirculation valve operative to control a quantity of exhaust gas that is recirculated, and control means for controlling the quantity of fuel delivered through the fuel injector in accordance with a travel of an accelerator and controlling a valve lift of the exhaust gas recirculation valve so that a variable regarding exhaust gas recirculation converges at a target value prescribed according to engine operating conditions, the control means causes the exhaust gas recirculation valve to operate to a valve closing side when the engine changes in operating condition from an ordinary drive state to an accelerative drive state and causes each of the fuel injectors to deliver fuel through the multi-split fuel injection comprised of at least early split fuel injection which terminates fuel injection in a compression stroke of each combustion cycle of the cylinder and later split fuel injection which performs fuel injection at a point near top dead center of the compression stroke when the engine changes in operating condition from the ordinary drive state to the accelerative drive state. As a result of performing the multi-split fuel injection upon an occurrence of transition of engine operating condition to the accelerative drive state from the ordinary drive state, while an increase in the utilization efficiency of air in the combustion chamber that is great in the extreme is realized, a extreme decline in NOx generation is caused owing to appropriately suppressed rises in combustion pressure and combustion temperature during premixed combustion. Furthermore, while a quantitative increase of fuel is brought about following transition of engine operating condition to the accelerative drive state, there occurs a quantitative increase of fresh intake air due to a quantitative reduction of exhaust gas that is admitted resulting from operating the exhaust gas recirculation valve to a closing side, so that a quantitative increase of smoke is suppressed while the engine provides increased output. Although the effect in controlling NOx generation gets somewhat less significant following the quantitative reduction of exhaust gas, nevertheless, the multi-split fuel injection is contributory to a great decline in NOx generation, resulting to a sufficient quantitative reduction of NOx emissions. In consequence, even upon an occurrence of transition of engine operating condition to the accelerative drive state from the ordinary drive state, i.e. in an engine operating region where there is the strong possibility of causing a quantitative increase of smoke besides the difficulty of controlling a quantitative increase of NOx emissions, it is achieved to suppress a quantitative reduction of both NOx emissions and smoke.

The direct injection engine control system may include detection means for detecting that the exhaust gas recirculation valve has operated to the valve closing side. In this direct injection engine control system the control means causes the fuel injector to commence the multi-split fuel injection when the detection means detects operation of the exhaust gas recirculation valve to the valve closing side. This is because the engine possibly brings about a quantitative increase of smoke due to aggravation of combustion if commencing the multi-split fuel injection at a point of time immediately after transition of engine operating condition to the accelerative drive state at which the quantity of exhaust gas is admitted into the intake air stream possibly in excess due to an operational delay of the exhaust gas recirculation valve. Commencing the multi-split fuel injection after operation of the exhaust gas recirculation valve to the valve closing side prevents a quantitative increase of smoke upon an occurrence of transition of engine operating condition to the accelerative drive state.

The direct injection engine control system may include a sensor such as an air flow sensor operative to detect a quantity of intake air introduced into the intake passage. In this direct injection engine control system the control means causes the fuel injector to commence the multi-split fuel injection when an air-to-fuel ratio in the combustion chamber which is obtained on the basis of a controlled quantity of fuel and the quantity of intake air detected by the air flow sensor reaches above a prescribed air-to-fuel ratio. Commencing the multi-split fuel injection when detecting a change of the air-to-fuel ratio beyond the prescribed ratio, in other words, after verification of the fact that the quantity of exhaust gas that is recirculated is not in excess of appropriate volume, prevents a quantitative increase of smoke due to fuel injection immediately after an occurrence of transition of engine operating condition to the accelerative drive state.

The control means may switch fuel injection to the blanket fuel injection at the point near top dead center of a compression stroke of each combustion cycle after a lapse of a prescribed period of time in which the multi-split fuel injection is performed. The prescribed period of time may be a lapse of prescribed time from the transition of engine operating condition to the accelerative drive state, or otherwise a time necessary for the crankshaft to turn through a prescribed angle. A lapse of the prescribed period of time may be verified on the basis of an extent of increase in rotational engine speed or vehicle speed, or a quantitative change of fuel following the increase in rotational engine speed or vehicle speed. While the multi-split fuel injection is accompanied by slight aggravation of fuel consumption rate due to that combustion energy of fuel that is delivered through the early split fuel injection partly acts as counter driving force, the switch to the blanket fuel injection from the multi-split fuel injection during acceleration suppresses such aggravation of fuel consumption rate.

The direct injection engine control system may include an intake throttle valve which is disposed in the intake passage upstream from a juncture to the exhaust gas recirculation passage. In this direct injection engine control system, the control means controls the intake throttle valve to operate to a closing side from a full open position thereof in an engine operating region of lower engine speeds and lower engine loads and perform the multi-split fuel injection when the engine changes its operating condition to the accelerative drive state from the engine operating region of lower engine speeds and lower engine loads. In general, diesel engines are equipped with an intake throttle valve in order to provide an appropriate pressure difference between the intake and exhaust passages for the reason of difficulty in admitting an ensured quantity of exhaust gas into the intake passage due to low negative pressure in the intake passage. Such a diesel engine has a great possibility that it generates a large quantity of smoke due to a lack of intake air introduced into the combustion chamber which is caused resulting from an increase in the fluid resistance of intake air upon an occurrence of transition of engine operating condition to the accelerative drive state at the beginning of a start of the vehicle. Therefore, in the direct injection engine control system including the intake throttle valve, performing the multi-split fuel injection upon an occurrence of transition of engine operating condition to the acceleative drive state simultaneously with the exhaust gas recirculation control brings about a significant effect of providing a quantitative reduction of NOx emissions as well as smoke.

The direct injection engine control system may include a turbosupercharger comprising a turbine that is driven by exhaust gas from the engine and a blower which is operationally connected to the turbine for rotation together with the turbine and operative to compress intake air introduced into the intake passage. In general, engines which are equipped with a turbosupercharger have cylinders whose compression ratios are lower than those of engines which is not equipped with a turbosupercharger, as a result of which such a turbosupercharged engine encounters a conspicuous decline in air charging efficiency during engine operation in an engine operating region of lower engine speeds where supercharging pressure is low. In consequence, there is the strong possibility of causing a quantitative increase of smoke due to a lack of intake air in the combustion chamber when the engine changes in operating condition to the accelerative state at a start of the vehicle. Therefore, in order to provide a quantitative reduction of NOx emissions and a quantitative reduction of smoke, it is effective in the extreme for the direct injection engine equipped with the turbosupercharger to perform the multi-split fuel injection simultaneously with performing the exhaust gas reciculation control upon an occurrence of transition of engine operating condition to the accelerative state.

The direct injection engine control system may further include a common-rail type of fuel injection system having a common-rail for accumulating fuel that is pressurized higher than injection pressure in addition to the air flow sensor the turbosupercharger and the intake throttle valve. In this direct injection engine control system, the control means feedback controls the exhaust gas recirculation valve so as to attain a valve lift with which an air-to-fuel ratio in the combustion chamber is converged at a target air-to-fuel ratio prescribed according to engine operating conditions, controls the intake throttle valve to operate to a closing side from a full open position thereof while the engine is in the ordinary drive state, i.e. in the engine operating region of lower engine speeds and lower engine loads, and performs the multi-split fuel injection when the engine changes in operating condition from the ordinary drive state to the accelerative drive state. In this direct injection engine control system, the quantity of exhaust gas that is recirculated is controlled by regulating the valve lift of the exhaust gas reciculation valve according to the quantity of intake air, as a result of which the air-to-fuel ratio in the combustion chamber is precisely feedback controlled. In the engine operating region of lower engine speeds, the intake throttle valve is controlled to lower intake air pressure in the intake passage, so as to admit an ensured quantity of exhaust gas into the intake passage. In this case, the compression ratio of each cylinder is prescribed to be lower than that of an engine not equipped with a turbosupercharger, Further, the direct injection engine control system, on one hand, provides a quantitative increase of fuel according to an engine demand upon an occurrence of transition of engine operating condition of engine operating condition to the accelerative drive state from the ordinary drive state and, on the other hand, causes a momentary decline in the air-to-fuel ratio in the combustion chamber in excess or change in the air-to-fuel ratio in the combustion chamber toward a rich side, resulting from a delay in response of the fuel injection control. In addition, since there is an increase in the fluid resistance of intake air that is caused by the intake throttle valve, the engine is apt to encounter a lack of intake air to be introduced into the combustion chamber. Moreover, the engine is also apt to encounter a lack of intake air to be introduced into the combustion chamber due to having a lower air charging efficiency in itself than an engine not equipped with a turbosupercharger. In consequence, there is the strong possibility of causing a momentary quantitative increase of smoke due to such a lack of intake air in the combustion chamber during transition of engine operating condition to the accelerative drive state. Accordingly, performing the multi-split fuel injection simultaneously with providing a quantitative reduction of exhaust gas that is recirculated upon an occurrence of transition of engine operating condition to the accelerative drive state realizes effective suppression of a quantitative increase of smoke simultaneously with a quantitative reduction of NOx emissions.

The direct injection engine control system may perform the multi-split fuel injection while the engine operates in an engine operating region where an exhaust gas recirculation ratio of a quantity of exhaust gas that is admitted into the intake air stream relative to a total quantity of exhaust gas from the engine is lower than a reference ratio. In this direct injection engine control system performing the multi-split fuel injection in the engine operating region where the exhaust gas recirculation ratio is lower than the reference ratio brings about an increase in the utilization efficiency of air that is great in the extreme and appropriately suppressed rises in combustion pressure and combustion temperature during premixed combustion. As a result of the mutually potentiating actions of these effects, it is realized to cause a great decline in NOx generation, and to provide a quantitative reduction of smoke even if a large quantity of fuel is delivered. Accordingly, while the direct injection engine control system causes a great decline in NOx generation simultaneously with suppressing a quantitative increase of smoke even in an engine operating region where the exhaust gas recirculation ratio is lower than the reference ratio, i.e. in the engine operating region of higher engine loads where is the difficulty of providing a quantitative reduction of NOx emissions which is brought about due to a large quantity of exhaust gas that is admitted. In the engine operating region of more then moderate engine loads where the exhaust gas recirculation ratio can be higher than the reference ratio, it is realized to provide a quantitative reduction of smoke by performing the multi-split fuel injection with the result of causing a great decline in NOx generation and further making the exhaust gas recirculation ratio lower than the reference ratio by means of causing a reduction of recirculated exhaust gas by a quantity corresponding to the decline in NOx generation. In consequence, the direct injection engine control system realizes a decline in both NOx and smoke generation at a higher level than the prior art control system.

The direct injection engine control system may feedback control the exhaust gas recirculation valve so as to attain a valve lift with which an air-to-fuel ratio in the combustion chamber, which is obtained on the basis of the quantity of fuel and the quantity of intake air detected by the air flow sensor, is converged at a target air-to-fuel ratio prescribed according to engine operating conditions. This engine operating region is a region where the air-to-fuel ratio in the combustion chamber is higher than the prescribed ratio. In this direct injection engine control system, the air-to-fuel feedback control is precise because an actual air-to-fuel ratio in the combustion chamber is obtained on the basis of an actual quantity of intake air detected by the air flow sensor and a controlled quantity of fuel injection and the quantity of exhaust gas that is admitted is controlled so that the actual air-to-fuel ratio thus obtained converges at a target air-to-fuel ratio. Moreover, because an exhaust gas recirculation ratio is detected on the basis of the actual air-to-fuel ratio, an engine operating region where the exhaust gas recirculation ratio is lower than the reference ratio is judged as the engine operating region where the air-to-fuel ratio in the combustion chamber is higher than the prescribed ratio. In the engine operating region of lower engine speeds where it is more difficult as compared with the engine operating region of higher engine loads in general to provide a quantitative decline in NOx and smoke generation by reason of a great change in air-to-fuel ratio relative to a quantitative change of fuel injection resulting from a lack of intake air that is caused due to a low intake air charging efficiency, performing the multi-split fuel injection is effective in causing a decline in NOx and smoke generation.

The direct injection engine control system may further perform the blanket fuel injection at a point near top dead center of a compression stroke of each the cylinder in an engine operating region where the exhaust gas recirculation ratio is higher than the reference ratio. This direct injection engine control system eliminates aggravation of fuel consumption rate that is caused due to that combustion energy of fuel that is delivered through the early split fuel injection partly acts as counter driving force in that engine operating region.

The direct injection engine control system may perform the multi-split fuel injection while the engine operates in an engine operating region of lower engine speeds and higher than moderate engine loads during execution of the exhaust gas recirculation In this direct injection engine control system, during execution of the exhaust gas recirculation in the engine operating region of lower engine speeds and higher than moderate engine loads, the fuel injection (early fuel injection) is performed at least once in a compression stroke such that the first fuel injection terminates within the compression stroke. The fuel delivered earlier is mixed with air flowing in the cylinder and then sufficiently vaporized and atomized, so as to gradually react with oxygen with a rise in cylinder pressure that is caused by ascending movement of the piston. As soon as the temperature of the entire area of the combustion chamber reaches a self-ignition temperature in the terminal stage of the combustion stroke, explosive combustion occurs. When the final fuel injection (later fuel injection) is made at a point near top dead center of the combustion stroke, a spray of the remaining part of fuel is burnt rapidly after a lapse of a short ignition delay time. In such a combustion condition, since the fuel delivered through the ealy split fuel injection and relatively widely spread in the combustion chamber is sufficiently vaporized and atomized with an effect of mixing with air and then burnt satisfactorily first, as a result of which the utilization efficiency of air in the combustion chamber is greatly increased, and the fuel combustion grows explosive following gradual reaction with oxygen. In consequence, the rises of combustion temperature and combustion pressure are not sharp in excess after the self-ignition temperature has been reached, so as to provide a great decline in NOx generation. Moreover, since a large quantity of fuel is delivered through the early split injection, the quantity of fuel delivered through the later split fuel injection is not very large even when quite a large total quantity of fuel be delivered. Moreover, the fuel spray is introduced into the combustion chamber at a high temperature where combustion has been started and then vaporized and atomized quickly, as a result of which the fuel combustion is quick and satisfactory. In consequence, a quantitative increase of smoke is controlled even when a large total quantity of fuel is delivered. According to the direct injection engine control system, performing the multi-split fuel injection in an engine operating region where the quantity of intake air is small due to a low intake air charging efficiency by reason of lower engine speeds and the quantity of fuel to be delivered is large due to an engine demand for high output by reason of higher than moderate engine loads, i.e. in the engine operating region where it is quite difficult to provide a quantitative reduction of both NOx emissions and smoke, enables sufficiently suppressing NOx and smoke generation. In particular, in the direct injection engine control system which is intended to provide a quantitative reduction of NOx emissions by the exhaust gas recirculation like the prior art engine control system, because a great decline in NOx generation is realized by performing the multi-split fuel injection, a quantitative reduction of smoke is achieved by reducing exhaust gas that is recirculated by a quantity corresponding to the decline in NOx generation. In consequence, a quantitative decrease in both NOx emissions and smoke in the exhaust gas is realized at a higher level.

The cylinder injection engine control system may perform the multi-split fuel injection so as to deliver more than one thirds of a full quantity of fuel that be delivered in one combustion cycle of each the cylinder through the early split fuel injection before a crank angle 30° before top dead center of a compression stroke of the combustion cycle and the remaining part of fuel through the later split fuel injection at a point near top dead center of the compression stroke. Performing the early split injection before a crank angle 30? before top dead center of a compression stroke of the combustion cycle enables sufficiently widely spreading a fuel spray so as to mix the fuel spray with air satisfactorily and vaporize and atomize the fuel, improving the utilization efficiency of air. Simultaneously, delivering more than one thirds of the full quantity of fuel through the early split fuel injection keeps the fuel spray at a density as thick as the fuel spray is capable of self-igniting. Moreover, since the remaining part is less than one thirds of the full quantity of fuel, performing the later split fuel injection at a point near top dead center of the compression stroke enables quickly and completely burning the remaining part without leaving not-burnt fuel.

The foregoing and other objects and features of the present invention will be clearly understood when reading the following detailed description regarding the preferred embodiment thereof in conjunction with the accompanying drawings, in which:

Figure 1 is a schematic illustration showing an overall structure of an engine equipped with an engine control system of the present invention;

Figure 2A is a schematic cross-sectional view of a turbine of a variable geometric turbsupercharger in which A/R is small;

Figure 2B is a schematic cross-sectional view of the turbine of the variable geometric turbsupercharger in which A/R is large;

Figure 3 is an illustration showing a structure of an exhaust gas recirculation valve and its associated actuator system;

Figure 4A is a graphical diagram showing the relationship between driving current and driving vacuum for the exhaust gas recirculation valve;

Figure 4B is a graphical diagram showing the relationship between driving current and valve lift of the exhaust gas recirculation valve;

Figure 5 is a block diagram showing a functional structure of the engine control system;

Figure 6 is a graphical diagram showing the relationship between air-to-fuel ratio and NOx emission level;

Figure 7 is a graphical diagram showing the relationship between air-to-fuel ratio and smoke value;

Figure 8 is a flow chart illustrating a basic sequence routine of exhaust gas recirculation and fuel injection control;

Figure 9 is a graphical diagram showing a change in the quantity of intake air flow with respect to time;

Figures 10A - 10E are a flow chart illustrating a sequence routine of exhaust gas recirculation control in which judgement of the transition of engine operating, fuel injection control and presetting control are executed;

Figure 11 is a graphical diagram showing the relationship between target air-to-fuel ratio during ordinary engine operation, target air-to-fuel ratio during transition of engine operating condition, and limit air-to-fuel ratio during transition of engine operating condition;

Figures 12A and 12B are a flow chart illustrating a sequence routine of control of fuel injection during transition of engine operating condition and control of gain correction in the exhaust gas recirculation control;

Figure 13 is an illustration of a gain correction factor map relative to the throttling quantity of intake air and engine speed of rotation;

Figure 14 is an illustration of a map of the throttling quantity of intake air relative to fuel injection quantity and engine speed of rotation;

Figure 15 is an illustration of a regional map which is used in judgement of multi-step fuel injection and blanket fuel injection;

Figure 16 is a time chart of multi-step fuel injection and blanket fuel injection;

Figures 17A - 17C are a flow chart illustrating a sequence routine of fuel injection timing control;

Figure 18 is a diagram showing a combustion pressure waveforms for multi-step fuel injection and blanket fuel injection;

Figure 19 is a graphical diagram showing NOx density and smoke density in exhaust gas relative to a change in exhaust gas recirculation ratio in a reference range for multi-step fuel injection and blanket fuel injection;

Figure 20 is a graphical diagram showing a change in fuel consumption rate relative to a change in exhaust gas recirculation ratio for multi-step fuel injection and blanket fuel injection;

Figure 21 is a flow chart illustrating a variation of part of the sequence routine of fuel injection timing control shown in Figure 17A;

Figure 22 is an illustration of a regional map similar to that shown in Figure 15;

Figure 23 is a flow chart illustrating another variation of part of the sequence routine of fuel injection timing control shown in Figure 17A;

Figure 24 is a flow chart illustrating a sequence routine of fuel injection mode changing control in the variation of the sequence routine of fuel injection timing control shown in Figure 17A; and

Figure 25 is an illustration of a regional map similar to that shown in Figure 15.

Referring to the drawings in detail and, more particularly, to Figure 1 which shows an overall structure of a control system A according to an embodiment of the invention for a direct injection type of diesel engine 1 having four cylinders 2 (only one of which is shown) that is installed on a vehicle equipped with, for instance, a manual transmission (not shown). A combustion chamber 4 is formed in the cylinder 2 above the top of a piston 3. A fuel injector 5, which is arranged with its nozzle projecting in the combustion chamber 4, operates to open and close at a prescribed timing to deliver fuel directly in the combustion chamber 4. The diesel engine 1 is equipped with a common-rail injection system including a common-rail 6 to which the injectors 5 are commonly connected. The common-rail 6 is provided with a high pressure delivery pump 8 which is driven by a crankshaft 7 and a pressure sensor 6a operative to monitor fuel pressure (common-rail pressure). The high pressure pump 8 operates so as to maintain the common-rail pressure at a prescribed level which is, for example, 40 MPa during idling and 80 MPa during other engine operation. An angle sensor 9 is provided at an end of the crankshaft 7 to monitor an angle of rotation of the crankshaft 7. Specifically, the angle sensor 9, which comprises, for example, a detected disk (not shown) which is formed with peripheral projections or notches arranged at regular angular intervals and an electromagnetic pick-up (not shown) positioned so as to be crossed by the notches or interrupted by the projections, generates one pulse every time the electromagnetic pick-up is crossed by the notch or interrupted by the projection, i.e. at every regular angular rotation of the crankshaft 7.

Air is introduced into the combustion chamber 4 of the cylinder 2 through an intake passage omprising a common pipe 10c having a surge tank at its downstream end and an intake manifold 10m through which the respective cylinders 4 are connected to the common intake pipe 10c via the surge tank. The intake passage 10 is equipped with an air cleaner (not shown), an air flow sensor 11, a blower 12, an intercooler 13 and an intake air throttle valve 14 in order from the upstream end of the common pipe 10c. The blower 12 is driven by a turbine 21 which will be described later to assist the vacuum by raising the pressure of incoming air. A pressure sensor 10a is provided to monitor supercharging pressure that is fed into each cylinder 2. The intake throttle valve 14 takes the form of a butterfly valve formed with a notch which admits intake air to flow through the notch even while it is fully closed and is controlled in valve lift or opening by regulating the vacuum acting on a diaphragm 15 through a vacuum control electromagnetic valve 16 as well as an exhaust gas recirculation valve 24 which will be described in detail later. The air flow sensor 11, which is of a constant-temperature hot-film type which is capable of certainly detecting the quantity of air stream even while there is a change in air flow rate, comprises a heater (not shown) arranged perpendicularly to a direction of the intake air stream and hot films (not shown) disposed on opposite sides of the heater and operates to monitor a forward flow of intake air from the upstream side to the downstream side and a back flow of intake air toward the upstream side, respectively, on the basis of fluctuations in film temperature. The quantity of intake air flow is accurately metered on the basis of these forward back flows of intake air, which prevents controlling the quantity of exhaust gas to be recirculated from causing an error due to the back flow of intake air.

Exhaust gas is discharged through an exhaust passage 20 comprising an exhaust manifold 20m connected to the respective cylinders 2 and a common exhaust pipe 20c which is equipped, in order from the upstream side, with the turbine 21 which is driven by exhaust gas and dives the blower 12 and a four-way catalytic converter 22 operative to purify hydrocarbons (HC), carbon monoxide (CO), oxides of nitrogen (NOx) and particulate. A variable geometry turbosupercharger (VGT) 25, which is comprised of the blower 12 and the turbine 21.

Referring to Figures 2A and 2B showing the turbine 21, a turbine rotor 21c with a number of movable turbine blades 21b arranged at regular angular intervals is installed in a turbine casing 21a. These movable turbine blades 21b are moves to change their angles with respect to a direction of rotation of the turbine rotor which is referred to as turbine blade angles. A turbine nozzle cross section which governs what is called an A/R ratio depends upon the turbine blade angle. That is, the turbine blade angle is a measurement of how high the A/R ratio of the turbine has - the greater the turbine blade angle, the higher the A/R ratio. While the turbine blade angle is kept small as shown in Figure 2A to provide a low A/R ratio, the supercharging efficiency is increased in a range of lower engine speeds where the quantity of exhaust gas flow is small. Contrary to this, while the turbine blade angle is kept large as shown in Figure 2B to provide a high A/R ratio, the supercharging efficiency is lowered in the range of lower engine speeds.

Referring back to Figure 1, an exhaust gas recirculation or EGR passage 23 through which exhaust gas is partly recirculated into an intake air stream is connected between the common exhaust pipe 20c upstream from the turbine 21 and the intake manifold 10m downstream far from the intercooler 13. The exhaust gas recirculation passage 23 is provided with a vacuum operated, diaphragm type of exhaust gas recirculation valve 24 to admit partly exhaust gas into the intake air stream. The valve lift or opening of exhaust gas recirculation valve 24 is variable so as to vary an exhaust gas recirculation ratio. As shown in detail in Figure 3, the exhaust gas recirculation valve 24 comprises a valve box 24e, a diaphragm 24a by which the valve box 24e is divided into upper or negative and lower pressure chambers 24f and 24g, a valve stem 24b which is fixedly installed to the diaphragm 24a and fixedly provided at opposite ends with a valve body 24c and a valve lift or opening sensor 26, and a coil spring 24d forcing the valve body 24c in a direction in which it closes the Exhaust gas recirculation passage 23. The valve body 24c moves up or down so as to linearly change an aperture size of the Exhaust gas recirculation passage 23. The upper pressure chamber (vacuum chamber) 24f is connected to a vacuum control electromagnetic valve 28 for vacuum control through a vacuum passage 27. A vacuum pump 29 as a vacuum source is connected to the electromagnetic valve 28. An electronic control unit (ECU) 35, which will be described later, provides a control signal or control current with which the electromagnetic valve 28 is operated to open or shut the vacuum passage 27. Opening and shutting the vacuum passage 27 regulates the vacuum as exhaust gas recirculation valve driving force in the upper pressure chamber 24f of the exhaust gas recirculation valve 24, so as thereby to linearly change the aperture size of the Exhaust gas recirculation passage 23. Specifically, as shown in Figure 4A, the Exhaust gas recirculation valve driving vacuum in the upper pressure chamber 24f is increasingly changed, in other words, the pressure in the upper pressure chamber 24f is dropped, as the control current increases. As shown in Figure 4B, the valve lift of the valve body 24c increases and decreases in proportion to a change in Exhaust gas recirculation valve driving vacuum. The change in valve lift has a hysteresis between a rise and a drop in Exhaust gas recirculation valve driving vacuum. A valve 30 of the same type as exhaust gas recirculation valve 24 is incorporated to the turbine 21 of the turbosupercharger 25 to regulate the vacuum acting on a diaphragm of the valve 30 through an electromagnetic valve 31 so as thereby to adjust the turbine blade angle.

As schematically shown in Figure 1, the electronic control unit (ECU) 35 is conceptually divided into several functional means including fuel injection control means 35a, exhaust gas recirculation control means 35b, fuel injection timing control means 35c and intake throttle valve control means 35d. The electronic control unit (ECU) 35 receives signals from various sensors including the pressure sensor 6a, the angle sensor 9, the air flow sensor 11a, the lift sensor 26, a accelerator travel sensor 32 which detects a travel of an accelerator (not shown) and a temperature sensor (not shown) which detects a temperature of engine coolant Te, and provides control signals with which the injector 5, the high pressure pimp 8, the intake throttle valve 14, the exhaust gas recirculation valve 24, the turbine 21 and the like are operated and controlled, respectively.

Figure 5 is a schematic functional block diagram illustrating the electronic control unit (ECU) 35. In a basic engine control by the electronic control unit 35, while a basic quantity of fuel injection is determined on the basis of an accelerator travel, and an air-to-fuel ratios for the respective cylinders 2 are controlled so as to be precisely uniform by regulating an EGR ratio through operation of the exhaust gas recirculation valve 24. The electronic control unit 35 further performs control of the common-rail pressure through operation of the high pressure pimp 8, operation control of the intake throttle valve 14 and control operation of the turbine blades 21b of the turbine 21, i.e. control of the variably geometry turbosupercharger 25. The exhaust gas recirculation ratio (EGR ratio) is prescribed as a ratio of the quantity of exhaust gas recirculation relative to the total quantity of exhaust gas and is given by the following expression:

EGR ratio = the quantity of exhaust gas recirculation/the total quantity of exhaust gas

Since the distribution of exhaust gas that is admitted into the intake passage 10 is uneven among the cylinders 2 and, in addition, the air intake characteristics are different among the cylinders 2, variations in exhaust gas recirculation ratio and the quantity of intake air among the cylinders occur even at same valve lifts of the exhaust gas recirculation valve 24. Cylinders 2 which have high exhaust gas recirculation ratios are supplied with small quantities of intake air, and cylinders which have low exhaust gas recirculation ratios are supplied with large quantities of intake air. Therefore, basically, a target air-to-fuel ratio that is common to all of the cylinders 2 is established, and the quantity of exhaust gas recirculation is controlled by cylinder so as to deliver the target air-to-fuel ratio into a cylinder for the quantity of intake air introduced into the cylinder. In other words, equalization and precision of air-to-fuel ratios for the respective cylinders 2 is accomplished not by equalizing proportions of recirculating exhaust gas relative to quantities of intake air introduced into the respective cylinders 2 but by controlling the quantity of exhaust gas for each cylinder 2 so as to deliver the target air-to-fuel ratio. More specifically, the electronic control unit (ECU) 35 has various maps including a two dimensional map 36 in which optimum target engine output torque (which is hereafter referred to as a target engine torque for simplicity) *Trqsol* has been experimentally prescribed with respect to a change in acceleration pedal travel *Acc* and a change in engine speed Ne, a three dimensional map 37 in which an optimum target quantity of fuel injection *Fsol* has been experimentally prescribed with respect to a change in engine speed *Ne,* a change in target engine torque *Trqsol* and a change in the quantity of flesh intake air *Fair* excluding fuel and a two dimensional map 38 in which an optimum target air-to-fuel ratio *A*/*Fsol* has been experimentally prescribed with respect to a change in engine speed *Ne* and a change in target engine torque Trqsol electronically stored in its memory. The target air-to-fuel ratio *A*/*Fsol* is employed as a target value of control based on which the quantity of exhaust gas recirculation necessary to cause a quantitative reduction of NOx emissions and smoke is determined. As seen in Figure 6 which shows the relationship between air-to-fuel ratio of the diesel engine 1 and the quantity of NOx emissions in the exhaust gas from the diesel engine 1, there is a tendency for NOx to provide a quantitative increase with an increase in air-to-fuel ratio. In light of this, NOx generation is controlled by lowering the air-to-fuel ratio by the aid of an increased quantity of exhaust gas. However, as seen in Figure 7 which shows the relationship between air-to-fuel ratio and smoke value of an exhaust gas, the quantity of smoke sharply increases when the air-to-fuel ratio drops beyond a critical point. This indicates that there is a limit to which the quantity of exhaust gas to be recirculated is increased. Therefore, in order to realize a quantitative reduction of both NOx emission and smoke, the target air-to-fuel ratio for controlling the quantity of exhaust gas recirculation is determined so as to be as close to but smaller than a critical ratio on a rich side at which a sharp increase in the quantity of smoke occurs as possible.

Specifically, in this embodiment, a target engine torque Trqsol is determined on the basis of an accelerator travel *Acc* which is detected by the accelerator travel sensor 32 and an engine speed *Ne* which is represented by a crank angle detected by the angle sensor 9 with reference to the target engine torque map 36 in a functional block 41 for target engine torque determination. Subsequently, a target quantity of fuel injection *Fsol* is determined on the basis of the engine speed *Ne,* the target engine torque *Trqsol* and a quantity of flesh intake air Fair which is detected by the air flow sensor 11 with reference to the map of target quantity of fuel injection 37 in a functional block 42 for determination of the target quantity of fuel injection. Further, a duration of excitation of the fuel injector 5 is determined on the basis of the target quantity of fuel injection Fsol and a common-rail pressure *CPR* which is controlled as will be described later. On the other hand, a target air-to-fuel ratio *A*/*Fsol* is determined on the basis of the engine speed Ne and the target engine torque *Trqsol* with reference the target air-to-fuel ratio map 38 in a functional block 43 for target air-to-fuel ratio determination. A target quantity of flesh intake air *FAsol* which is used to perform control of flesh intake air in a functional block 45, is determined by multiplying the target quantity of fuel injection *Fsol* by the target air-to-fuel ratio A/Fsol in a functional block 44 for determination of the target quantity of intake air. This intake air control do not regulate directly a supplying quantity of flesh intake air itself but regulates the quantity of exhaust gas recirculation so as thereby to provide a change in proportion of fresh intake air. Specifically, the exhaust gas recirculation valve 24 is controlled in valve lift according to a target quantity of valve lift *Ktegrsol* which is determined on the basis of the target quantity of flesh intake air *FAsol* in place of a correction value for the quantity of flesh intake air.

The electronic control unit (ECU) 35 has a two dimensional map 50 in which an optimum common-rail pressure *CRPsol* has been experimentally prescribed with respect to changes in target engine torque *Trqsol* and engine speed Ne and which is electronically stored in the memory. A target common-rail pressure *CRPsol* is determined based on the engine speed *Ne* and the target engine torque *Trqsol,* which is determined in the target engine torque determination block 41, with reference the common-rail pressure map 50 in a functional block 46 for common-rail pressure determination and used to control a common-rail pressure *CRP.* The common-rail pressure map 50 prescribes a target common-rail pressure *CRPsol* such that the target common-rail pressure *CRPsol* becomes higher with an increase in engine speed Ne and in target engine torque *Trqsol.* This is because, since an injection time for which the fuel injector 5 is kept open must be shortened relatively to an increase in engine speed *Ne,* it is necessary to rise fuel injection pressure in order to secure a sufficient quantity of fuel injection. On the other hand, in a range of lower engine speeds, it is preferred to widely spread a fuel spray by the flow of air in the combustion chamber 4 by delivering the fuel taking a relatively long time. Therefore, the fuel injection time is prolonged to a certain extent and the fuel injection pressure is lowered correspondingly to the prolongation of fuel injection time. In regard to the target engine torque, since it is necessary to increase the quantity of fuel injection more with an increase in engine load, the fuel injection pressure is risen in order to secure the quantity of fuel injection.

The electronic control unit (ECU) 35 further has a two dimensional map 51 in which an optimum target throttling quantity of intake throttle valve *THsol* has been experimentally prescribed with respect to a change in the target quantity of fuel injection *Fsol* and engine speed *Ne* electronically stored in the memory. A target throttling quantity of intake throttle valve *THsol* is determined based on the engine speed Ne and the target quantity of fuel injection *Fsol*, which is determined in block 42 for determination of the target quantity of fuel injection, with reference the map 51 of target throttling quantity of intake throttle valve in a functional block 47 for determination of a target throttling quantity of intake throttle valve and used to control a throttling quantity of intake throttle valve *TH.*

The electronic control unit (ECU) 35 further has a two dimensional map 52 in which an optimum boost pressure *Boostsol* has been experimentally prescribed with respect to changes in target engine torque Trqsol and engine speed Ne electronically stored in the memory. A target boost pressure Boostsol is determined based on the engine speed *Ne* and the target engine torque *Trqsol,* which is determined in the target engine torque determination block 41, with reference the target boost pressure map 52 in a functional block 48 for target boost pressure determination and used together with an intake air pressure *Boost* in the surge tank which is detected by the pressure sensor 10a to determine a turbine blade angle *VGTsol* of the turbine blades 21b of the turbine 21 for the target boost pressure *Boostsol*. The variable geometry turbosupercharger (VGT) 25 is controlled so that the intake air pressure *Boost* reaches the target boost pressure Boostsol.

Figure 8 is a flow chart illustrating a general sequence routine of exhaust gas recirculation control and fuel injection control performed by the electronic control unit (ECU) 35. When the sequence logic commences and control proceeds directly to a block at S1 where a quantity of intake air is detected by the air flow sensor 11 and then to a block at step S2 where a rotational angle of the crankshaft 7 is detected by the angle sensor 9. Control parameters are calculated and determined at steps S3 through S6. Specifically, a quantity of flesh intake air *Fair* for each cylinder 2 is calculated on the basis of the quantity of intake air and the rotational angle of the crankshaft 7 at step S3, and an engine speed Ne is determined according to the rotational angle of the crankshaft 7 at step S4. Further, at step S6, a target quantity of fuel injection *Fsol* is calculated on the basis of an accelerator travel *Acc* which is detected by the accelerator travel sensor 32 at step S5 and the quantity of flesh intake air *Fair*. Subsequently, a judgement is made on the basis of the accelerator travel *Acc* and the quantity of flesh intake air *Fair* at step S7 as to drive states, namely whether the diesel engine 1 has shifted to an accelerative drive state where the diesel engine 1 operates with higher loads or stays in an ordinary drive state where the diesel engine 1 operates with lower or middle loads. In the ordinary driving state, a basic target air-to-fuel ratio is determined at step S9, and then a target quantity of flesh intake air is determined based on the basic target air-to-fuel ratio at step S9. Subsequently, basic control of the exhaust gas recirculation valve 24 is performed at step S10, and then correction control of the exhaust gas recirculation valve 24 is performed according to the quantity of flesh intake air *Fair* for each cylinder 2 at step S11. On the other hand, in the accelerative drive state, after determining a target air-to-fuel ratio for acceleration at step S12, control of the exhaust gas recirculation valve 24 for acceleration is performed at step S13, and then control of the injector 5 is subsequently performed at step S14.

Figure 9 shows a change of the quantity of intake air which is detected by the air flow sensor 11 with the passage of time. A shaded part indicates a back flow of intake air. The quantity of intake air that is actually introduced into each cylinder 2 is given as an integrated value of the reminder in quantity between a forward flow and a back flow. It is clearly perceived that the actually introduced quantity of intake air slightly fluctuates.

Figures 10A through 10E are a flow chart illustrating a sequence routine of exhaust gas recirculation control.

Referring to Figure 10A which is a part of the exhaust gas recirculation valve control sequence routine for calculation of the quantity of flesh intake air *Fair* for each cylinder 2 on the basis of a quantity of intake air detected by the air flow sensor 11 and a rotational angle of the crankshaft 7 detected by the angle sensor 9 which is performed at step S3 in the general routine of exhaust gas recirculation valve shown in Figure 8, when the sequence logic commences, measurements are made to find an integrated quantity of intake air *Q* and a passed time T. At step S101, a judgement is made as to whether the crankshaft 7 has turned through 180°. The measurements of the integrated quantity of intake air and time are repeatedly made at step S102 and S103, respectively, until the crankshaft 7 turns through 180°. Every time the crankshaft 7 turns through 180°, the cylinder number i is changed by an increment of one at step S104. The four cylinders 2 are assigned numbers #1, #2, #3 and #4 in order of ignition. If the changed cylinder number *i* is beyond three, then it is changed to zero in the case where cylinders of the four-cylinder diesel engine 1 are numbered zero, one, two and three, respectively. The integrated quantity of intake air *Q* which is introduced into a specific cylinder 2 during the 180° turn of the crankshaft 7 is taken as a quantity of intake air *Q(i)* for the specific cylinder 2 of cylinder number i at step S105, and the interval *T* counted during the 180° turn of the crankshaft 7 is taken as a crank interval *T(i)* for the specific cylinder 2(i) at step S106. At step S107, an average quantity of intake air for the four cylinders is calculated as a basic quantity of intake air *Qav.* Thereafter, calculations are made to determine a quantitative change rate of intake air $\Delta Q(i)$ (which is referred to as an intake air change rate) and a change rate of crank interval $\Delta T(i)$ (which is referred to as a crank interval change rate) for the specific cylinder 2(i) with respect to the quantity of intake air *Q(i-1)* and the crank interval *T(i-1)* for the cylinder 2(i-1) whose intake stroke is directly prior to that of the specific cylinder 2(i) at steps S108 and S109, respectively. A ratio of the quantity of intake air *Q(i)* relative to the crank interval change rate $\Delta T(i)$, which indicates the quantity of intake air *Q(i)* tempered with the crank interval change rate $\Delta T(i)$, is calculated as an intake air change index *Qt(i)* at step S110. Tempering the quantity of intake air *Q(i)* with the crank interval change rate $\Delta T(i)$, which is intended to decrease disturbance due to fluctuations in engine torque or in angular velocity of the crankshaft 7 as small as possible, proves effective during engine idling which causes significant fluctuations in engine output torque. A quantitative intake air characteristic *Qt'(i)* for the specific cylinder 2 (i) is determined based on the intake air change index $\Delta Qt'(i)$ at steps S111. The quantitative intake air characteristic $\Delta Qt'(i)$ is given by the following expression:

$$\Delta Qt'(i) = \Delta Qt(i) \times r + \Delta Qt(i)' \times (1 - r)$$

Where *r* is the constant which is greater than 0 but equal to or less than 1; and

$\Delta Qt(i)'$ is the intake air change index obtained in the previous cycle of the sequential routine.

The quantitative intake air characteristic $\Delta Qt'(i)$ is obtained by repeating the calculation of the above expression to reflect the previous intake air change index and the current intake air change index at prescribed proportions. Accordingly, individual differences of the quantitative intake air characteristic $\Delta Qt(i)$ are gradually made distinct.

Referring to Figure 10B which is a part of the exhaust gas recirculation valve control sequence routine for the engine operating condition transition judgement made at step S7 in the general routine of exhaust gas recirculation valve control shown in Figure 8, because there is a demand for an increase in the quantity of intake air according to an increase in the quantity of fuel injection while the diesel engine 1 changes in its drive state from the ordinary drive state to the accelerative drive state, the exhaust gas recirculation valve 24 is necessarily closed to decrease the quantity of exhaust gas that is recirculated into the intake air stream. For this reason, the engine operating condition transition judgement is made in order to control the exhaust gas recirculation valve 24. When the vehicle is decelerated, fuel injection is interrupted in the range of engine operating conditions with an exception of some engine operating conditions and, at this time, the exhaust gas recirculation valve 24 is closed to prevent exhaust gas from being recirculated.

When the sequence logic proceeds to step S112, an accelerator travel *Acc* is read in. After determining a quantity of fuel injection *F* (a target quantity of fuel injection: *Fsol)* from the map of target quantity of fuel injection 37 shown in Figure 5 on the basis of the target engine torque *Trqsol*, the engine speed *Ne* and the basic quantity of intake air *Qav* at step S113., a change in accelerator travel (an accelerator travel change) ?Acc of the current accelerator travel *Acc* from the last accelerator travel *Acc'* at step S114, and a critical accelerator travel $\alpha cc$ for judgement of a transition of engine operating condition to the accelerative drive state is determined from a two dimensional map (not shown) electronically stored in the memory which prescribes critical accelerator travels with respect to a quantity of fuel injection *F* and an engine speed Ne at step S115. The critical accelerator travel $\alpha cc$ is experimentally determined such as, on one hand, to become greater with an increase in engine speed *Ne* so that determination of transition of engine operating condition to the accelerative drive state is apt to hardly occur and, on the other hand, to become smaller with an increase in the target quantity of fuel injection *Fsol* so that determination of transition of engine operating condition to the accelerative drive state is apt to easily occur. Since the quantity of exhaust gas recirculation is great by nature while the diesel engine 1 operates with low engine loads, the accelerator travel *Acc* is made smaller with an increase in the quantity of fuel injection so that the exhaust gas decreasing control is quickly caused when an increasing change in accelerator travel (an increasing change in the quantity of fuel injection) is great. After calculating an acceleration coefficient $\alpha$ which is the accelerator travel change $\Delta Acc$ divided by the accelerator travel $\Delta Acc$ ($\Delta Acc/\alpha cc$) at step S116, a judgement is made at step S117 as to whether the acceleration coefficient $\alpha$ is greater than one (1). When the acceleration coefficient $\alpha$ is greater than one (1), it is determined that the diesel engine 1 has changed in its operating condition to the accelerative drive state, then, a target quantity of exhaust gas recirculation valve control *KTegr* is determined from a map (not shown) prescribes a quantity of exhaust gas recirculation valve control with respect to an acceleration coefficient $\alpha$ and a target air-to-fuel ratio *A*/*Fsol* and is electronically stored in the memory and at step S118. Since the greater the increasing accelerator travel change $\Delta Acc$ is, the more rapid the decreasing change in the quantity of exhaust gas recirculation must be, the target quantity of exhaust gas recirculation valve control *KTegr* is experimentally determined in the exhaust gas recirculation valve control map such that opening of the exhaust gas recirculation valve 24 becomes smaller with an increase in acceleration coefficient $\alpha$.

When the acceleration coefficient $\alpha$ is equal to or smaller than one (1), engine operating condition transition judgement on the basis of a change in the quantity of fuel injection is executed. While, in the case of the engine operating condition transition judgement made on the basis of an accelerator travel Acc, the target quantity of exhaust gas recirculation valve control *KTegr* is, so to speak, expectantly determined according to a result of the engine operating condition transition judgement, however, in the engine operating condition transition judgement made on the basis of a change in the quantity of fuel injection, an actual engine demand for acceleration is checked based on the quantity of fuel injection and the exhaust gas recirculation valve control is performed so as to be in compliance with the actual engine demand.

Specifically, when the acceleration coefficient $\alpha$ is equal to or smaller than one (1) at step S117 or after determining the target quantity of exhaust gas recirculation valve control *KTegr* at step S118, a quantitative change rate of fuel injection $\Delta F$ is calculated by dividing the current quantity of fuel injection *F* by the last quantity of fuel injection *F'* at step S119. Subsequently, at step S120, a standard quantity of fuel injection *Fk* for engine operating condition transition judgement is determined from a two dimensional map (not shown) which prescribes a standard quantity of fuel injection for judgement of transition of engine operating condition to the accelerative drive state with respect to a quantity of fuel injection *F* and an engine speed *Ne* and is electronically stored in the memory. After calculating a fuel injection quantitative change coefficient $\alpha$ which is given by dividing the quantitative fuel injection change rate $\Delta F$ by the standard quantity of fuel injection *Fk* at step S121, a judgement is made at step S122 as to whether the fuel injection quantitative change coefficient $\alpha$ is greater than one (1). It is judged that the diesel engine 1 still stays in the ordinary drive state when the fuel injection quantitative change coefficient $\alpha$ is equal to or smaller than one (1), or it is judged that the diesel engine 1 has changed in drive state to the accelerative drive state when the fuel injection quantitative change coefficient $\alpha$ is greater than one (1).

Referring to Figure 10C which is a part of the sequence routine of exhaust gas recirculation valve control for calculation of a valve lift of the exhaust gas recirculation valve which is performed when the diesel engine 1 is in the ordinary drive state, after determining a target engine torque *Trqsol* from the target engine torque map 36 on the basis of the accelerator travel *Acc* and the engine speed *Ne* at step S123 and a target air-to-fuel ratio *TA*/*F* (*A*/*Fsol*) from the target air-to-fuel ratio map 38 on the basis of the target engine torque *Trqsol* and the engine speed *Ne* at step S124, a target quantity of intake air *TQ* is calculated by multiplying the quantity of fuel injection F by the target air-to-fuel ratio *TA*/*F* at step S125. This target air-to-fuel ratio *TA*/*F* is set to a value that realize a quantitative reduction of both NOx emission and smoke as was previously described. The value differs little by little according to regions of engine operating conditions, namely engine speeds *Ne* and engine torque *Trq* or quantities of fuel injection *F*. For example, in a region of engine operating conditions where the variable geometry turbosupercharger 25 charges sufficiently, owing to an occurrence of a strong air flow in addition to a rise in cylinder compression temperature which is caused due to a high air charging efficiency, fuel is well mixed with air with a result of a decline in smoke generation. In consequence, it is possible to set a target air-to-fuel ratio to be more smaller (on a rich side) in a region of higher engine speeds (where the supercharging pressure is high) than in a region of lower engine speeds.

Subsequently, after calculating a quantitative deviation *Qerr* of the target quantity of intake air *TQ* from the basic quantity of intake air *Qav* at step S126, a basic quantity of exhaust gas recirculation valve control *Tegr* (*EGRsol*) following a PIO control law so as to converge the intake air quantitative deviation *Qerr* at zero at step S127. That is, for example, the basic quantity of exhaust gas recirculation valve control *Tegr* is determined by adding up a proportional control term which is given by multiplying the intake air quantitative deviation *Qerr* by a proportional control gain (P gain), an integral control term which is given by multiplying an integrated value of the intake air quantitative deviation *Qerr* by an integration control gain (I gain) and a differential control term which is given by multiplying a differentiated value of the intake air quantitative deviation *Qerr* by a differential control gain (D gain) all together. The proportional control gain (P gain) is obtained by multiplying a basic gain by a gain factor *K* which is increasingly or decreasingly changed so as to vary the responsiveness and the convergency of the PID control.

Following the determination of the basic quantity of exhaust gas recirculation valve control *Tegr* at step S117, a judgement is made at step S128 as to a condition for verifying an ordinary drive state. that an absolute value of the accelerator travel change $\Delta$*Acc* remains smaller than a prescribed threshold accelerator travel *Thacc* for a predetermined times n of consecutive cycles and, at the same time, fuel injection is effected. When the condition for the ordinary drive state is verified, a corrective quantity of exhaust gas recirculation valve control $\Delta$*Tegr* for each cylinder 2(i) is calculated in order of cylinder numbers #1, #2, #3 and #4 from the following expression at step S129:

$$\Delta Tegr(i) = \Delta Qt'(i) \times E(i) + \Delta Tegr'(i)$$

where $\Delta$*Qt'(i)* is the last quantitative intake air characteristic;
*E(i)* is the corrective gain; and
$\Delta$*Tegr'(i)* is the last corrective quantity of exhaust gas recirculation valve control.

In the expression the last quantitative intake air characteristic $\Delta$*Qt'(i)*, which is enhanced in itself, is used to further bring the corrective quantity of exhaust gas recirculation valve control $\Delta$*Tegr* to an appropriate corrective quantity according to an individual difference of the cylinder 2(i). When the corrective quantities of exhaust gas recirculation valve control $\Delta$*Tegr* for all of the cylinder are calculated at step S130, an average corrective quantity of exhaust gas recirculation valve control $\Delta$*Tegr-av* for the four cylinders is calculated. Although the average corrective quantity of exhaust gas recirculation valve control $\Delta$*Tegr-av* essentially be zero, it takes a minus or a plus value due to various causes as a result of calculating a corrective quantity of exhaust gas recirculation valve control $\Delta$*Tegr* from the above expression at step S131. The essential purpose in correctively controlling the quantity of exhaust gas recirculation valve control Tegr for each cylinder 2 by using the basic quantity of exhaust gas recirculation valve control *Tegr* as a criterion is possibly vitiated. Therefore, the average corrective quantity of exhaust gas recirculation valve control $\Delta$*Tegr-av* is always kept zero by an adding the absolute value of the average corrective quantity of exhaust gas recirculation valve control $\Delta$*Tegr-av* to the corrective quantity of exhaust gas recirculation valve control $\Delta$*Tegr-av(i)* for each cylinder 2(i) when it takes a minus value or by subtracting the absolute value of the average corrective quantity of exhaust gas recirculation valve control $\Delta$*Tegr-av* from the corrective quantity of exhaust gas recirculation valve control $\Delta$*Tegr(i)* for each cylinder 2(i) when it takes a plus value at step S131. The corrective quantity of exhaust gas recirculation valve control $\Delta$*Tegr(i)* thus obtained is added by the basic quantity of exhaust gas recirculation valve control *Tegr* as a current corrective quantity of exhaust gas recirculation valve control $\Delta$*Tegr(i)* at step S132.

Figure 10D is a part of the general routine of exhaust gas recirculation valve control for presetting the exhaust gas recirculation valve 24 when the diesel engine 1 is determined to have changed in its drive state to the accelerative drive state based on an acceleration coefficient a at step S117 in the engine operating condition transition judgement sequence routine shown in Figure 10B, the target quantity of exhaust gas recirculation valve control *KTegr* thus determined at step S118 is different according to acceleration coefficients $\alpha$ and target air-to-fuel ratios TA/F. The exhaust gas recirculation valve 24 is fully closed for acceleration coefficients $\alpha$ greater by a more than prescribed value. That is, the exhaust gas recirculation is interrupted when a driver's demand for acceleration is strong a maximum quantity of intake air is introduced into each cylinder 2, so as to cause the diesel engine 1 to increase its output by increasing the quantity of fuel injection without increasing the quantity of smoke. In addition, in such the case, control for presetting the exhaust gas recirculation valve 24 is performed so as to rapidly enter the exhaust gas recirculation control when the diesel engine 1 returns to the ordinary drive state from the accelerative drive state. Specifically, the exhaust gas recirculation valve 24 balances force of the spring 24d acting on the valve body 24c in a closing direction with valve control negative pressure by supplying predetermined valve control negative pressure (presetting negative pressure) into the upper or negative pressure chamber 24f so that pressing force with which the valve body 24c is pressed against the valve seat by the spring 24d is as weak as possible, or otherwise zero, even while the exhaust gas recirculation valve 24 closes the exhaust gas recirculation passage 23. The presetting negative pressure is valve control negative pressure at a point of time that the valve lift reaches zero when the exhaust gas recirculation 24 is forced in the closing direction as shown in Figure 4B.

As shown in Figure 10D illustrating steps for providing the exhaust gas recirculation valve 24 with presetting negative pressure, when the quantity of exhaust gas recirculation valve control *Tegr* is less than a specific quantity of exhaust gas recirculation valve control *Tegr0* that provides a valve lift of zero *EGRV0* at step S133, a valve lift *EGRVlift* detected by the valve lift sensor 26 is read in at step S134. When the valve lift *EGRVlift* is greater than the zero valve lift *EGRV0* at step S135, the valve control pressure is lowered until the exhaust gas recirculation valve 24 attains the zero valve lift *EGRV0* at step S136. On the other hand, when the quantity of exhaust gas recirculation valve control *Tegr* is greater than the specific quantity of exhaust gas recirculation valve control *Tegr0*, the control proceeds directly to step S225 to lower the valve control pressure until the exhaust gas recirculation valve 24 attains the zero valve lift *EGRV0*.

Figure 10E shows a part of the general sequence routine of exhaust gas recirculation control for fuel injection control which is performed when the diesel engine 1 is determined to have changed in its drive state to the accelerative drive state. When the diesel engine 1 is determined to be in the accelerative drive state at step S122, an optimum target air-to-fuel ratio *KTA*/*F* is determined from a map (not shown) according to the the fuel injection quantitative change coefficient $\alpha$, the quantity of fuel injection Fand the engine speed Ne at step S137. The target air-to- fuel ratio *KTA*/*F* upon an occurrence of transition of engine operating condition to the accelerative drive state is set to be larger in the accelerative drive state than in the ordinary drive state so as to quickly boost engine torque with an effect of controlling smoke generation by lowering the quantity of exhaust gas recirculation. The target air-to-fuel ratio map, which is electronically stored in the memory, prescribes a target air-to-fuel ratio *KTA*/*F* so as to be greater according to quantities of fuel injection *F* with a drop in engine load, an increasing change in fuel injection quantitative change coefficient $\alpha$ or a drop in engine speed *Ne.* Subsequently, a target quantity of intake air *TQ* upon a shift to the accelerative drive state is calculated based on the target air-to-fuel ratio *KTA*/*F* and the quantity of fuel injection *F* at step S138. A quantity of exhaust gas recirculation valve control *Tegr* is determined based on the target quantity of intake air *TQ* as determined in the ordinary drive state for providing an increase in the quantity of intake air by means of quickly decreasing the quantity of exhaust gas recirculation through steps S126 - S128 and S133 - S136. Thus, even though the target air-to-fuel ratio *KTA*/*F* is greater or on the lean side in the accelerative drive state than in the ordinary drive state, when the diesel engine 1 changes its drive state to the accelerative drive state, fuel is possibly momentarily delivered in excess into each cylinder 2. Therefore, a certain limit is imposed to an increase in the quantity of fuel so as to control the increase in the quantity of fuel through steps S139 - S141. Specifically, a limit air-to-fuel ratio *LimitA*/*F* for controlling smoke generation is determined with reference to a map (not shown) electronically stored in the memory in which a limit air-to-fuel ratio is prescribed with respect to a quantity of fuel injection *F* and an engine speed Ne at step S139. Subsequently, after calculating a limit quantity of fuel injection *FLimit* on the basis of the limit air-to-fuel ratio *LimitA*/*F* and the quantity of intake air *Q(i)* at step S140, a target quantity of fuel injection *TF* is set to the smallest one among a basic quantity of fuel injection *F,* the limit quantity of fuel injection *FLimit* and a maximum quantity of fuel injection *Fmax* at step S141.

As shown in Figure 11, the target air-to-fuel ratio *TA*/*F* during transition of engine operating condition to the accelerative drive state is set to be greater or on the lean side than the target air-to-fuel ratio *KTA*/*F* in the ordinary drive state, and the limit air-to-fuel ratio *LimitA*/*F* is set to be smaller or on the rich side than the target air-to-fuel ratio *KTA*/*F* in the ordinary drive state. The limit quantity of smoke corresponding to the limit air-to-fuel ratio *LimitA*/*F* is somewhat larger in the accelerative drive state than in the ordinary drive state and is, for example, approximately 2BU. The limit air-to-fuel ratio *LimitA*/*F* can be basically set to be greater on the lean side with an increase in the quantity of fuel injection and to be smaller on the rich side with an increase in engine speed and. has been experimentally defied with respect to changes in the quantity of fuel injection *F* and engine speed Ne and electronically stored in the memory. In this instance, the basic quantity of fuel injection *F* is one determined on the basis of engine speed *Ne* and accelerator travel *Acc,* and the maximum quantity of fuel injection *Fmax* is the upper limit that does not lead to damages of the diesel engine 1.

Figures 12A and 12B are a flow chart illustrating a sequence routine of intake throttle valve control which runs in synchronism with rotation of the diesel engine 1 according to a control program stored in the memory. After detecting an accelerator travel *Acc* and an engine speed *Ne* at step S201 and S202, respectively, a quantity of fuel injection *F* is read in at step S203. Subsequently, a judgement is made on the basis of an output from the acceleator travel sensor 32 at step S204 as to whether the accelerator is released. When the accelerator is rapidly eased by a travel more than a prescribed return travel and completely released, an acceleration flag *Flag* is set up or to a state of "1" at step S205, and a counter is reset in count to zero and restarted to count a lapse of time *Tup* since the detection of complete release of the accelerator. On the other hand, when the accelerator still remains stepped on, another judgement is subsequently made at step S207 as to whether the acceleration flag Flag is up. When the acceleration flag *Flag* remains up, the counter changes its count *Tup* by an increment of $\Delta t$ at step S208. After resetting the counter at step S206 or changing the count *Tup* of the counter by an increment of $\Delta t$ at step S208, a judgement is made at step S209 as to whether the count *Tup* has exceeded a predetermined count *Tup1.* While the count *Tup* is equal to or less than the predetermined count *Tup1*, a gain correction coefficient $\gamma 1$ for an exhaust gas recirculation control gain is read in from a first gain correction map. As shown in Figure 13, in the gain control map the gain correction coefficient $\gamma 1$ has been experimentally prescribed according to the last throttling quantity of intake throttle valve *TH* and engine speed *Ne* so as to provide an improved responsiveness of exhaust gas recirculation control to a release of the accelerator. The gain correction coefficient $\gamma 1$ takes a value between zero and one which becomes smaller as the engine speed *Ne* increases or as the throttling quantity of intake throttle valve *TH* increases. On the other hand, when the count *Tup* has exceeded the threshold count *Tup1*, the acceleration flag *Flag* is reset down or to a state of "0" at step S211. When a predetermined time has expired, i.e. when the predetermined count *Tup1* has been counted since the detection of a release of the accelerator, the acceleration flag *Flag* remains reset down at step S207 in the following cycle, then, control proceeds to a block at step S212 where a gain correction coefficient $\gamma 2$ for the exhaust gas recirculation control gain is read in from a second gain correction map. The second gain correction map prescribes the gain correction coefficient $\gamma 2$, which is greater than the gain correction coefficient $\gamma 1$ in the entire region of engine operating conditions, for an exhaust gas recirculation control gain used in the ordinary drive state . After resetting the acceleration flag *Flag* down at step S209 or after reading a gain correction coefficient $\gamma 1$ or $\gamma 2$ at step S210 or S212, a judgement is made at step S213 as to whether the diesel engine 1 is in an idling state where the vehicle stops with the accelerator remaining released. While the diesel engine 1 is idling, a throttling quantity of intake throttle valve *TH* is determined so as to force the intake throttle valve 14 to completely close at step S217. On the other hand, when the diesel engine 1 is out of idling, a two dimensional digital map (which corresponds to the target intake throttle valve throttling map 51 shown in Figure 5) in which an optimum throttling quantity of intake throttle valve *TH* (i.e. a target throttling quantity of intake throttle valve *THsol*) has been experimentally prescribed with respect to the quantity of fuel injection *F* and the engine speed Ne is referred. As shown in Figure 14, the optimum throttling quantity of intake throttle valve *TH* is fixed to zero (0) so as to control the intake throttle valve 14 to fully open when at least one of the quantity of fuel injection *F* and the engine speed *Ne* is great while the engine operates with high loads. Specifically, there is an apprehension of a lack of intake air due to an increased quantity of exhaust gas admitted into the intake passage which is caused due to a large pressure difference between intake air and exhaust gas during operation of the diesel engine 1 in a range of high engine speeds and, on the other hand, there is an apprehension of a lack of intake air with respect to fuel an increased quantity of fuel during operation of the diesel engine 1 in a range of high engine loads. However, according to the control system of the invention, an increase in the quantity of smoke due to a lack of intake air is prevented by keeping the intake throttle valve 14 remain fully open so as to introduce a sufficient quantity of intake air. In a range of relatively low engine loads, the throttling quantity of intake throttle valve *TH* is made larger with a decrease in the quantity of fuel injection *F* or in engine speed *Ne.* That is, although the lower the engine speed is, the smaller the pressure difference between intake air and exhaust gas is, a sufficient quantity of exhaust gas admitted into the intake passage is assured by decreasing the throttling quantity of intake throttle valve *TH* so as to increase the pressure difference even during operation of the diesel engine 1 in a range of low engine loads.

Thereafter, a decision is made at step S215 as to whether intake air must be throttled. This decision is made on the basis of the state of acceleration flag *Flag* and the throttling quantity of intake throttle valve *TH.* When the answer is affirmative, this indicates that the acceleration flag *Flag* is up and the engine operates out of the range of high engine speeds or high engine loads, a throttling quantity of intake throttle valve *TH* is determined with reference to the throttling map at step S216. After the determination of a throttling quantity of intake throttle valve *TH* at step S216 or S317, a control signal representative of the throttling quantity of intake throttle valve *TH* is sent to the vacuum control electromagnetic valve 16 so as to control the intake throttle valve 14 to attain the throttling quantity of intake throttle valve *TH* at step S218. After driving the intake throttle valve 14 at step S218 or when the answer to the decision made at step S215 is negative, this indicates that the acceleration flag *Flag* is down or the engine operates in the range of high engine speeds or high engine loads even while the acceleration flag *Flag* is up, a gain coefficient *K* based on which an exhaust gas recirculation valve control gain is determined and which is given by the following expression is calculated at step S219.

$$K = K \times (1 + \underline{\gamma})$$

When the gain correction coefficient $\gamma 1$ for the accelerator flly released has been read the gain coefficient *K* is increased by a difference between the gain correction coefficient $\gamma 1$ and the gain correction coefficient $\gamma 2$ for the exhaust gas recirculation control gain. The gain coefficient *K* is greater as compared to that for ordinary driving conditions. As a result, control gains for the proportional control for the exhaust gas recirculation control is increased, so that the responsiveness of operation of the exhaust gas recirculation valve 24 is enhanced. That is, in a prescribed period of time from a detection of releasing the accelerator in which the accelerator travel is abruptly changing, the exhaust gas recirculation valve 24 is forced to operate certainly following the abrupt change in accelerator travel without a delay. The prescribed time may be relatively short, for example, one to two seconds, which is spent to operate a manual transmission for a gear shift. In the short time, an occurrence of aggravation of the convergency of control does not matter.

With the intake throttle valve control, for example, when it is forecasted that the accelerator is stepped on and pressed down for starting the vehicle while the engine 1 is idling, the exhaust gas recirculation valve 24 is regulated at a relatively small valve lift (for example a half of the full valve lift) by fully closing the intake throttle valve 14 with an effect of increasing a pressure difference between intake air and exhaust gas. When the vehicle starts and the diesel engine 1 changes its drive state from ordinary state to the accelerative drive state, while the intake throttle valve 14 is quickly opened, the exhaust gas recirculation valve 24 is forced to closed as the quantity of fuel injection increases. However, at this time, since the exhaust gas recirculation valve 24 has been previously regulated at a small valve lift, an operational delay of the exhaust gas recirculation valve 24 is decreased, so that the fuel is prevented from being momentarily enriched with an effect of controlling smoke generation.

In addition to the indirect control of air-to-fuel ratio by controlling the quantity of exhaust gas recirculation, the control system for the diesel engine 1 performs multi-split fuel injection control which refers to delivering a whole quantity of fuel through early split fuel injection and later split fuel injection in a compression stroke of each combustion cycle for each cylinder, which realizes a quantitative reduction of both NOx emissions and smoke at a higher level as compared with the prior art control systems. In order to perform the multi-split fuel injection control, engine drive conditions, i.e. engine speed *Ne* and quanty of fuel injection *F*, are divided into three regions, namely an engine operating region (I) for multi-split fuel injection, an engine operating region (II) for blanket fuel injection where a full quantity of fuel is splayed all at once in each combustion cycle for each cylinder, and an engine operating region (III) for pilot fuel injection where a prescribed small quantity of fuel is delivered as before a full quantity of fuel injection is made. These fuel injection control region is prescribed in the form of a fuel injection control map 53 such as shown in Figure 15. More specifically, as shown in Figure 16, in the multi-split fuel injection engine operating region (I) that is selectively used for lower engine speeds and moderate engine loads, fuel is delivered by the fuel injector 5 through the early split fuel injection that is made at approximately the middle of, i.e. at a crank angle of 90° before top dead center (BTDC90°CA), of a compression stroke of each combustion cycle and the later split fuel injection that is made at a point near top dead center, for example at a crank angle of 2° after top dead center, of the compression stroke of each combustion cycle, and, in the blanket fuel injection engine operating region (II) and the pilot fuel injection engine operating region (III), fuel is delivered all at once by the fuel injector 5 through primary fuel injection that is made at a point near top dead center, for example at a crank angle of 4° after top dead center, of a compression stroke of each combustion cycle. In the pilot fuel injection engine operating region (III) that is selectively used for, for example, engine idling, a prescribed small quantity of fuel is pre-delivered by the fuel injector 5 through pilot fuel injection immediately before the primary fuel injection.

Figures 17A - 17C are a flow chart illustrating a sequence routine of fuel injection timing control which runs in synchronism with rotation of the crankshaft every prescribed angle of rotation of the crankshaft according to a control program stored in the memory. In this instance the term "later split injection timing *TW2*" used herein shall mean and refer to a timing of termination of later fuel injection and the term "primary injection timing *TWm*" used herein shall mean and refer to a timing of termination of primary fuel injection.

When the sequence logic commences, after detecting an accelerator travel *Acc*, an engine speed Ne and a temperature of engine coolant *Te* at step S301, S302 and S303, respectively, a quantity of fuel injection *F* is read in at step S304. Subsequently, after detecting a common-rail pressure *CRP* at step S305, one of the engine operating regions (I) - (III) in which the quantity of fuel injection *F* and the engine speed *Ne* fall is selected at step S306. The engine operating regions (I), (II) and (III). At step S307 a judgement is made as to whether the selected region is the multi-split fuel injection engine operating region (I).

When the diesel engine 1 operates in the multi-split fuel injection engine operating region (I), a whole pulse width *Wall* is determined on the basis of the common-rail pressure *CRP* and the quantity of fuel injection *F* from a fuel injection pulse width control map (not shown) at step S308. In this instance the whole pulse width *Wall* consists of an early injection pulse width *W1* for the early split fuel injection and a later injection pulse width *W2* for the later split fuel injection. In the fuel injection pulse width control map an optimum whole pulse width *Wall* has been experimentally prescribed with respect to common-rail pressure *CRP* and the quantity of fuel injection *F* such that the larger the quantity of fuel injection *F*, the greater the pulse width is and the higher the common-rail pressure *CRP*, the smaller the pulse width is, and electrically stored in the memory. Thereafter, a later injection pulse width *W2* for the later split fuel injection is determined according to the whole pulse width *Wall* at step S309. This later injection pulse width *W2* has been experimentally prescribed with respect to the whole pulse width *Wall* and electrically stored in the form of a later fuel injection pulse width control map in the memory. In this instance, the later injection pulse width *W2* is made equal to the whole pulse width *Wall* within a range of relatively small whole pulse widths *Wall* and, however, increased at an increasing rate as the whole pulse width becomes large in a range of relatively large whole pulse widths *Wall.* The increasing rate is gradually declined so as to make an ultimate later injection pulse width *W2* approximately half the whole injection pulse width *Wall.* Subsequently to the determination of the later injection pulse width *W2*, a later split injection timing *TW2* is determined on the basis of the engine coolant temperature *Te* and the common-rail pressure *CRP* at step S310. This later split injection timing *TW2* has been experimentally prescribed with respect to engine speed *Ne,* engine coolant temperature *Te* and common-rail pressure *CRP* and electrically stored in the form of a later split injection timing control map in the memory. In this instance, the later split injection timing *TW2* is, on one hand, advanced as the engine cooling temperature *Te* rises or as the engine speed *Ne* lowers and, on the other hand, retarded as the common-rail pressure *CRP* drops. This is because an ignition delay time varies according to a change in engine coolant temperature *Te,* and the spray penetration differs according to a change in common-rail pressure *CRP*. At step S311, the later injection pulse width *W2* and the later split injection timing *TW2* are fixed. A timing of initiation of the fuel injection is advanced more with respect to the later split injection timing *TW2* as a reference point as the later injection pulse width *W2* becomes greater or retarded more as a reference point as the later injection pulse width *W2* becomes smaller. At step S312, an early injection pulse width *W1* for the early split fuel injection is determined by subtracting the later injection pulse width *W2* from the whole pulse width *Wall.* Subsequently to the determination of the early injection pulse width W1, an early split injection timing *TW1* is determined on the basis of the engine coolant temperature *Te* and the common-rail pressure *CRP* from an early split injection timing control map (not shown) similar to the later split injection control map at step S313, and then the early injection pulse width *W1* and the early split injection timing *TW1* are fixed at step S314. The final step orders return to repeat another sequence routine.

On the other hand, when the diesel engine 1 operates out of the multi-split fuel injection engine operating region (I), in other words, operates in the blanket fuel injection. engine oeprating region (II) or in the pilot fuel injection engine drive egion (III), a primary injection pulse width *Wm* is determined on the basis of the common-rail pressure *CRP* and the quantity of fuel injection *F* from the fuel injection pulse width control map at step S315 and a primary injection timing *TWm* is determined on the basis of the engine coolant temperature *Te* and the common-rail pressure *CRP* at step S316. This primary injection pulse width *Wm* for energizing the fuel injector 5 to deliver full quantity of fuel all at once through the primary fuel injection at a point near top dead center of a compression stroke is equivalent to the whole pulse width *Wall* and determined from a fuel injection pulse width control map similar to one used to determine the whole pulse width at step S308. After fixing the primary injection pulse width *Wm* and the primary injection timing *TWm* at step S317 and selecting one of the engine operating regions (I) - (III) in which the quantity of fuel injection *F* and the engine speed *Ne* fall at step S318, a judgement is made at step S319 as to whether the selected engine operating region is the pilot fuel injection engine operating region (III). When the engine drive condition is in the pilot fuel injection engine operating region (III), a pilot injection pulse width *Wp* is determined from a pilot injection pulse width control map (not shown) at step S320. This pilot injection pulse width *Wp* is as small as approximately 10 % of the primary injection pulse width *Wm* and shortened as the common-rail pressure *CRP* drops. Subsequently, a pilot injection timing *TWp* is determined on the basis of the pilot injection pulse width *Wp* and the primary injection timing *TWm* at step S321. This pilot injection timing *TWp* is determined such that there is a prescribed time interval between the pilot fuel injection and the primary fuel injection. After fixing the pilot injection pulse width *Wp* and the pilot injection timing *TWp* at step S322, the final step orders return to repeat another sequence routine.

As apparent from the above, while the diesel engine 1 operates in the blanket fuel injection engine operating region (II) and in the pilot fuel injection engine operating egion (III), a full quantity of fuel is delivered all at once at a point near top dead center of a compression stroke of each combustion cycle, and, in particular, while the engine operates in the pilot fuel injection engine operating region (III) such as during idling, the pilot fuel injection is made to ease a sharp rise in combustion pressure and combustion temperature during premixed combustion of fuel delivered through the primary fuel injection, which leads to lowering engine noises.

Reference is now made to Figures 18 and 19 for the purpose of providing the effects of the fuel injection control which will enhance an understanding of the feature of the control system of the invention.

While the diesel engine 1 operates with engine speed and load which fall in the multi-split fuel injection engine operating region (I), more than one thirds of a full quantity of fuel is delivered through early fuel injection at the middle of a compression stroke in one combustion cycle for each cylinder 2. This fuel delivered through the early split fuel injection is mixed with air flowing in the cylinder 2 and then sufficiently vaporized and atomized, so as to gradually react with oxygen with a rise in cylinder pressure that is caused by ascending movement of the piston 3. As soon as the temperature of the entire area of the combustion chamber 4 reaches a self-ignition temperature at an near end of the combustion stroke, explosive combustion occurs. On the other hand, a spray of the remaining part of fuel that is made through the later fuel injection at a point near top dead center of the combustion stroke is burnt rapidly after a lapse of a short ignition delay time. According to the combustion of fuel delivered through the multi-split fuel injection, the fuel spray made through the early split fuel injection is relatively widely spread with an effect of being mixed with air and sufficiently vaporized and atomized, so as to increase the utilization efficiency of air in the combustion chamber 4. Furthermore, the fuel combustion grows explosive following gradual reaction with oxygen, so that the premixed combustion after self-ignition is prevented from developing excessively strong. In other words, as shown in Figure 18, the cylinder pressure *P1* develops as shown by a solid line when the multi-split fuel injection is made and becomes higher at a point before top dead center of a compression stroke than the cylinder pressure *P2* developing as shown by a broken line when the blanket fuel injection is made and, thereafter, reaches a peak pressure due to the explosive combustion. After the explosive combustion, the cylinder pressure *P1* becomes lower than the cylinder pressure *P2*. The rise of combustion pressure is more lenient when the multi-split fuel injection is made than when the blanket fuel injection is made. In consequence, a quantitative reduction of NOx emissions is remarkable. On the other hand, as a result of delivering a large proportion of fuel through the early split fuel injection, since the quantity of fuel that is delivered through the later split fuel injection is not so much even when the quantity of fuel *F* that is delivered in one combustion cycle is significantly large and the fuel through the later split fuel injection is delivered into the combustion chamber 4 in which combustion has started and which is under high temperature and high pressure, the fuel is rapidly vaporized and atomized and rapidly and satisfactorily burnt, as a result of which an increase of smoke is prevented even though a quantity of fuel is delivered.

Figures 19 and 20 show exemplary results of experiments, that were made by the inventors, on the relationship between quantities of NOx emissions and smoke and the relationship between fuel consumption rate and exhaust gas recirculation ratio, respectively, in the case where fuel was delivered through the blanket fuel injection and the case where fuel was delivered through the multi-split fuel injection. Measurements were made on NOx density and smoke density in the exhaust gas from an in-line four cylinder diesel engine which was operated with constant low engine speed and constant moderate engine load while changing the exhaust gas recirculation ratio within a certain extent together with a change in fuel consumption rate relative to a change in exhaust gas recirculation ratio. It is proved from Figure 19 that delivering fuel through the multi-split fuel injection lowers the density of NOx in the exhaust gas more greatly than splaying fuel through the blanket fuel injection. Furthermore, it is proved that delivering fuel through the multi-split fuel injection with keeping an exhaust gas recircuration ratio lower than a value at a point X, the quantity of smoke is decreased. In other words, in the case where the quantity of exhaust gas that is recirculated into the combustion chamber 4 is not necessary to be so large, delivering fuel through multi-split fuel injection while controlling the exhaust gas recircuation ratio enables causing a significant quantitative reduction of NOx emissions without causing a quantitative increase of smoke or causing a quantitative reduction of both NOx emissions and smoke. Therefore, the quantity of NOx emissions discharged into the atmosphere while the diesel engine 1 operates with lower engine speeds and higher than middle engine loads is greatly lowered by delivering fuel through the multi-split fuel injection. The quantity of smoke in the exhaust gas is decreased by making an target air-to-fuel ratio greater (change toward a lean side) in the exhaust gas recirculation control during performing the multi-split fuel injection so as to decrease the quantity of exhaust gas that is recirculated as compared with the prior art control for the same engine operating condition. In consequence, a quantitative reduction of both NOx emissions and smoke in the exhaust gas is realized at a higher level as compared with the prior art control.

In this embodiment, in particular, since the intake throttle valve 14 which is disposed in the intake passage 10 upstream from the juncture to the exhaust gas recirculation passage 23 is closed by a prescribed quantity while the diesel engine 1 operates lower engine speeds and lower engine loads so as to cause an increase in negative pressure in the intake passage 10, there occurs a lack of intake air that is admitted into the combustion chamber 4 due to an increase in fluid resistance of the intake air which is caused by the intake throttle valve 14 in a case where the diesel engine 1 changes in its drive state to the accelerative drive state from the drive state with lower engine speeds and lower engine loads such as when the vehicle starts, so that there is the strong possibility of causing an increase in the quantity of smoke. Even in such a case, the fuel injection control system of the invention effectively provides an extreme quantitative reduction of NOx emissions while keeping smoke generation under control by performing the multi-split fuel injection while reducing the quantity of exhaust gas that is recirculated. Furthermore, in this embodiment, since the diesel engine 1 is equipped with the variable geometry turbosupercharger 25 which is driven by an exhaust gas stream to compress intake air and provides a compression ratio of the cylinder 2 lower than an engine which is not equipped with a turbosupercharger, it causes a significant decrease in intake air charging efficiency in a region of lower engine speeds where supercharging pressure is low. For this reason, in a case where the diesel engine 1 changes in its drive state to the accelerative drive state such as when the vehicle starts, there occurs a heavy lack of intake air in the combustion chamber 4 which causes an increase in the quantity of smoke. Even in such a case, the fuel injection control system of the invention effectively provides extreme quantitative reduction of NOx emissions while keeping smoke generation under control by performing the multi-split fuel injection while reducing the quantity of exhaust gas that is recirculated.

In addition, in this embodiment, the fuel injection control system of the invention performs the blanket fuel injection at a point near dead top center of a compression stroke as ordinary in the engine operating region (II) for the blanket fuel injection exclusive of lower engine speeds and higher than moderate engine loads. That is, if the multi-split fuel injection is performed in that engine operating region, combustion energy of fuel delivered through the early split fuel injection is partly lost as counter driving force, which causes aggravation of fuel consumption rate regardless of exhaust gas recirculation ratio as compared with performing the blanket fuel injection as shown in Figure 20. Therefore, the fuel injection control system of the invention performs, on one hand, the multi-split fuel injection in the engine operating region (I) with the purpose of giving purification of exhaust gas and, on the other hand, the blanket fuel injection in the engine operating region (II). In consequence, the aggravation of fuel consumption rate such as caused due to the multi-split fuel injection is controlled.

In place of performing the multi-split fuel injection in the engine operating region of lower engine speeds and higher than moderate engine loads (I), it may be determined on the basis of air-to-fuel ratio in the combustion chamber 4 whether the multi-split fuel injection must be performed as shown in Figure 21.

Referring to Figure 21 which is a flow chart showing partly the sequence routine of fuel injection control illustrated in Figures 17A - 17C, when the sequence logic commences, after detecting an accelerator travel Acc, an engine speed Ne and a temperature of engine coolant *Te* at step S301, S302 and S303, respectively, a quantity of fuel injection *F* is read in at step S304. Subsequently, after detecting a common-rail pressure *CRP* at step S305 and a quantity of intake air *Qi* at step S306(1), an actual air-to-fuel ratio *A*/*F* in the combustion chamber 4 is determined by dividing the quantity of intake air *Qi* by the quantity of fuel injection *F* at step S306(2). Subsequently, either one of engine operating regions (A) and (B) in which the engine speed Ne and the actual air-to-fuel ratio *A*/*F* fall is selected at step S306(3). The engine operating regions (A) and (B) are prescribed for the multi-split fuel injection and the blanket fuel injection, respectively, and stored in the form of a fuel injection control map 54 such as shown in Figure 22 in the memory. At step S307 a judgement is made as to whether the selected region is the multi-split fuel injection engine operating region (A) for the multi-split fuel injection.

The fuel injection control map 54 divides actual air-to-fuel ratios *A*/*F* into lean side ratios higher than a boundary air-to-fuel ratio *A*/*F** which fall in the engine operating region (A) and rich side ratios lower than the boundary air-to-fuel ratio *A*/*F** which fall in the engine operating region (B). In this instance, since the actual air-to-fuel ratio *A*/*F* is indirectly controlled by regulating the quantity of exhaust gas that is admitted into an intake air stream, the condition of engine operation that provides an air-to-fuel ratio *A*/*F* falls in the engine operating region (A) above the boundary air-to-fuel ratio *A*/*F** indicates that the exhaust gas recirculation ratio is lower than the reference ratio. According to the fuel injection control modified as shown in Figure 21, the multi-split fuel injection is performed when the diesel engine 1 operates with an exhaust gas recirculation ratio lower than a standard exhaust gas recirculation ratio indicated by the point X shown in Figure 19 if prescribing the boundary air-to-fuel ratio *A*/*F** such that it takes a value corresponding to the standard exhaust gas recirculation ratio. In this way, as apparent in Figure 19, the fuel injection control system realizes a quantitative reduction of both NOx emissions and smoke in the exhaust gas at a higher level as well as the previous embodiment. Furthermore, in the engine operating region (B) where an air-to-fuel ratio *A*/*F* takes a value higher than the boundary air-to-fuel ratio *A*/*F**, the blanket fuel injection is performed, so as to control the aggravation of fuel consumption rate such as caused due to the multi-split fuel injection. The reason for the boundary air-to-fuel ratio *A*/*F** declines as the engine speed *Ne* increases is that the intake air charging efficiency declines in a region of lower engine speeds and the stability of combustion is not aggravated even though changing the exhaust gas recirculation ratio higher in the region of higher engine speeds as compared with that in the region of lower engine speeds.

Figure 23 is a flow chart illustrating partly a sequence routine of fuel injection control according to another preferred embodiment by which the part of the fuel injection control system previously illustrated in Figure 17A - 17C is replaced This fuel injection control system is directed to restraining an increase in the quantity of smoke at the beginning of acceleration while providing a quantitative reduction of NOx emissions greatly as compared with the prior art control systems by performing multi-split fuel injection while reducing the quantity of exhaust gas that is recirculated.

Referring to Figure 23, when the sequence logic commences, after detecting an accelerator travel *Acc*, an engine speed *Ne* and a temperature of engine coolant *Te* at step S401, S402 and S403, respectively, a quantity of fuel injection *F* is read in at step S404. Subsequently, after detecting a common-rail pressure *CRP* at step S405, a judgement is made at step S406 as to whether the diesel engine 1 starts acceleration. This judgement is made on the basis of an acceleration coefficient $\alpha$ and a fuel injection quantitative change coefficient $\beta$ in the same manner of determination of transition of engine operating condition to the accelerative drive state as taken in the exhaust gas recirculation control shown in Figures 10A - 10E. That is, when the diesel engine 1 has changed its drive state from the ordinary drive state where both acceleration coefficient $\alpha$ and fuel injection quantitative change coefficient $\beta$ are equal to or less than one (1) to the accelerative drive state where at least one of these acceleration coefficient $\alpha$ and fuel injection quantitative change coefficient $\beta$ is greater than one (1), after setting a multi-split fuel injection flag *Flagsp* up to a state of "1" which indicates that it is in the period of performing the multi-split fuel injection at step S407 and resetting a count *Tdown* of a counter to an initial count *Tdown0* at step S408, a judgement is made on the basis of a valve lift detected by the valve lift sensor 26 at step S409 as to whether the exhaust gas recirculation valve 24 has operated to a valve closing side since a point of time before the judgement regarding transition of engine operating condition to the accelerative drive state. That is, for example, when the exhaust gas recirculation valve 24 has changed its valve lift by a decrement more than a prescribed quantity since a point of time at which the judgement of acceleration has been made, or otherwise attained a valve lift smaller than a prescribed valve lift, it is determined that the exhaust gas recirculation valve has operated to the valve closing side and then the sequence routine proceeds to steps S308 through S314 illustrated by the flow chart in Figure 17B to perform the multi-split fuel injection. On the other hand, it is determined at step S409 that the exhaust gas recirculation valve has not yet operated to the valve closing side and then the sequence routine proceeds to steps S315 through S322 illustrated by the flow chart in Figure 17C to perform the blanket fuel injection. To sum up, when the diesel engine 1 changes its operating state from the ordinary drive state to the accelerative drive state, the multi-split fuel injection is performed after verification of the fact that the exhaust gas recirculation valve has operated to the valve closing side.

On the other hand, when the diesel engine 1 operates in the ordinary drive state or continuously stays in the accelerative drive state, a judgement is made at step S410 as to whether the multi-split fuel injection flag *Flagsp* remains up. When the multi-split fuel injection flag *Flagsp* is down or has been reset to a state of "0," this indicates that it is out of the period of performing the multi-split fuel injection, then the sequence routine proceeds to steps S315 through S322 illustrated by the flow chart in Figure 17C to perform the blanket fuel injection. However, when the multi-split fuel injection flag *Flagsp* remains up, then after changing the count *Tdown* by a prescribed decrement at step S411, another judgement is made at step S412 as to whether the count Tdown has reached zero (0). When it is before zero (0), then the sequence routine proceeds to the judgement concerning the closing operation of the exhaust gas recirculation valve 24 at step S409. On the other hand, when the count *Tdown* has reached zero (0), then after resetting the multi-split fuel injection flag *Flagsp* down at step S413, the sequence routine proceeds to steps S315 through S322 to perform the blanket fuel injection. That is, until a lapse of a prescribed time that is counted by a counter after a switch of fuel injection mode from the blanket fuel injection to the multi-split fuel injection following transition of engine operating condition from the ordinary drive state to the accelerative drive state, the multi-split fuel injection is continually performed. On the other hand, after a lapse of the prescribed time, the blanket fuel injection is compellingly performed even while the diesel engine 1 remains in the accelerative drive state. This enables not only controlling a quantitative increase of smoke following a quantitative increase of fuel at the beginning of acceleration by performing the multi-split fuel injection but also restraining aggravation of fuel consumption rate such as caused due to the multi-split fuel injection by switching the fuel injection mode to the blanket fuel injection after a lapse of a prescribed time.

As described above, according to the fuel injection control of this embodiment, the quantitative reduction of NOx emissions is greatly significant by performing the multi-split fuel injection upon an occurrence of transition of engine operating condition from the ordinary drive state to the accelerative drive state. Furthermore, resulting not only from operating the exhaust gas recirculation valve 24 to a valve closing side following a quantitative increase of fuel due to the transition of engine operating condition to the accelerative drive state but from a quantitative invrease of fresh intake air due to operating the intake throttle valve 14 into a full closed position, the diesel engine 1 provides output meeting a demand for acceleration. Performing the multi-split fuel injection simultaneously with lowering the exhaust gas recirculation ratio enables sufficiently restraining a quantitative increase of smoke during acceleration. Furthermore, compellingly performing the blanket fuel injection after a lapse of a prescribed time since the transition of engine operating condition to the accelerative drive state even during acceleration enables not only controlling a quantitative increase of smoke following a quantitative increase of fuel at the beginning of the acceleration, and also enables restraining aggravation of fuel consumption rate such as caused due to the multi-split fuel injection after the middle of the acceleration. In addition, in this embodiment, since the multi-split fuel injection is performed after verification of the fact that the exhaust gas recirculation valve has operated to the valve closing side on the basis of a signal from the lift sensor 26 upon an occurrence of transition of engine operating condition to the accelerative drive state is detected, there is the strong possibility of causing a quantitative increase of smoke due to aggravation of combustion which is caused by the multi-split fuel injection under exhaust gas that is admitted momentarily in excess resulting from the exhaust gas recirculation valve 24 operates with a delay. Such a harmful effect is hardly dissolved perfectly even by decreasing the delay in operation of the exhaust gas recirculation valve 24 through the intake throttle valve control such as shown in Figures 12A and 12B. However, in this embodiment, the quantitative increase of smoke due to aggravation of combustion is eliminated by commencing the multi-fuel injection after actual closing of the exhaust gas recirculation valve 24.

The fuel injection control shown in Figure 23 may be modified so as to make a judgement of commencement of the multi-split fuel injection on the basis of an air-to-fuel ratio in the combustion chamber 4.

Referring to Figure 24 which shows steps of a sequence routine of the fuel injection control with which step S409 in Figure 23 where a judgement regarding closing of the exhaust gas recirculation valve 24 is made in order to perform the multi-split fuel injection is replaced. In the modified fuel injection control, judgement of commencement of the multi-split fuel injection is made on the basis of an air-to-fuel ratio in the combustion chamber 4.

As shown in Figure 24, when the diesel engine 1 changes its drive state to the accelerative state, subsequently to resetting the counter to the initial count *Tdown0* at step S408, or when the count *Tdown* has not yet reached zero (0) at step S412, a quantity of intake air *Qi* is detected at step S409(1). After determining an actual air-to-fuel ratio A/F in the combustion chamber 4 by dividing the quantity of intake air *Qi* by the quantity of fuel injection *F* at step S409(2), either one of engine operating regions (A) and (B) in which the engine speed *Ne* and the actual air-to-fuel ratio *A/F* fall is selected at step S409(3). The engine operating regions (A) and (B) are prescribed for the multi-split fuel injection and the blanket fuel injection, respectively, and stored in the form of a fuel injection control map 55 such as shown in Figure 25 in the memory. Thereafter, a judgement is made at step S409(4) as to whether the selected region is the multi-split fuel injection engine operating region (A) for the multi-split fuel injection. When in the engine operating region (A), then the sequence routine proceeds to steps S308 through S314 illustrated by the flow chart in Figure 17B to perform the multi-split fuel injection. On the other hand, when out of the engine operating region (A), then the sequence routine proceeds to steps S315 through S322 illustrated by the flow chart in Figure 17C to perform the blanket fuel injection.

The fuel injection control map 55 is similar to that shown in Figure 22 excepting that a boundary air-to-fuel ratio *A*/*F** is shifted toward a rich side. In the accelerative drive state, the diesel engine 1 is usually required to provide increased output in order to meet the driver's demand for acceleration. For this reason, although it is disadvantageous in view of realizing a quanitative decrease of smoke, expansion of the engine operating region (A) for the multi-split fuel injection to a more rich side enables the diesel engine 1 to provide a sufficient increase in output. According to the variant, the multi-split is performed with a lowered exhaust gas recirculation ratio when the diesel engine changes its drive state to the accelerative drive state from the ordinary drive state, so it is realized to cause a sufficient decline in both NOx and smoke generation, while the diesel engine 1 provides output increasing according to accelerative conditions. The multi-split fuel injection is commenced after verification of the fact that an air-to-fuel ration *A*/*F* in the combustion chamber 4 has reached above a prescribed value after transition of engine operating condition to the accelerative drive state. Therefore, even if the air-to-fuel ratio *A*/*F* is momentarily changed to a rich side due to a lack of intake air which is caused by an operational delay of the intake throttle valve 14 and/or an increase in operational delay of the exhaust gas recirculation valve 24 upon an occurrence of transition of engine operating condition to the accelerative drive state from the ordinary drive state, the multi-split fuel injection is interrupted under such engine operating conditions but commenced after the air-to-fuel ratio *A*/*F* has reached the boundary air-to-fuel ratio *A*/*F**, as a result of the engine control system according to the variant prevents it more certainly to provide a quantitative increase of smoke at the beginning of acceleration as compared with the control system according to the previous embodiment.

Various variants and other embodiments may occur to those skilled in the art. In the multi-split fuel injection, in place of enforcing the early split fuel injection once to deliver more than one thirds of a full quantity of fuel and the later split fuel injection once to deliver the remaining part of fuel in one combustion cycle, the early split fuel injection may be repeated two or more than two times. In such a case, the plurality of times of early split fuel injection are enforced at a crank angle 30° before top dead center of a combustion stroke of one combustion cycle to deliver preferably more than one thirds of a full quantity of fuel. Although, in the above described embodiments, the multi-split fuel injection is enforced either in the region of lower engine speeds and higher than moderate engine loads or upon an occurrence of transition of engine operating condition to the accelerative drive state from the ordinary drive state, it may be enforced both in the region of lower engine speeds and higher than moderate engine loads and upon the occurrence of transition of engine operating condition to the accelerative drive state from the ordinary drive state. Further, in place of controlling air-to-fuel ratios in the respective cylinders to become uniform and converge at a target air-to-fuel ratio, it may be employed to control the air-to-fuel ratios all together. Engines having no exhaust gas recirculation feature can lower levels of harmful emissions therefrom if installing the control system of the invention thereto.

Engines to which the control system of the invention are not limited to a direct injection diesel engine equipped with a turbosupercharger, an intake throttle valve installed in an intake passage and of a type delivering fuel directly into combustion chambers of the respective cylinders by means of a common-rail fuel injection system. That is, engines to which the control system of the invention may be not equipped with a turbosupercharger or an intake throttle valve. Further, the common-rail fuel injection system may be replaced with a unit injector installed to each cylinder. The control system of the invention may be installed to direct-injection spark ignition gasoline engines.

## Claims

1. A direct injection internal combustion engine with fuel injectors (5) operative to deliver fuel into combustion chambers (4) of cylinders (2), and with an exhaust gas recirculation passage (23) through which exhaust gas is partly admitted into an intake air stream in an intake passage (10), an exhaust gas recirculation valve (24) operative to control a quantity of exhaust gas that is recirculated, and control means (9, 11, 28, 32, 35) controlling the quantity of fuel delivered through said fuel injector in accordance with a travel of an accelerator and controlling a valve lift of said exhaust gas recirculation valve so that a variable regarding exhaust gas recirculation converges at a target value prescribed according to engine operating conditions, **characterized by**:

   said control means (9, 11, 28, 32, 35) causing said exhaust gas recirculation valve (24) to operate to a valve closing side when said engine (1) changes its drive state from an ordinary drive state to an accelerative drive state and causing each said fuel injector (5) to commence delivering fuel through split fuelinjection including an early fuel injection which terminates fuel injection in a compression stroke of each said cylinder (2) and a later fuel injection which performs fuel injection at a point near top dead center of said compression stroke when said engine (1) changes its drive state from said ordinary drive state to said accelerative drive state.

2. An engine as defined in claim 1, and further comprising detection means (26, 35) for detecting that said exhaust gas recirculation valve (24) has operated to said valve closing side, wherein said control means (9, 11, 28, 32, 35) causes said fuel injector (5) to commence said multi-split fuel injection when said detection means (26, 35) detects closing of said exhaust gas recirculation valve (24) to said valve closing side.

**3.** An engine as defined in claim 1, and further comprising a sensor (11) operative to detect a quantity of intake air introduced into said intake passage (10), wherein said control means (9, 11, 28, 32, 35) causes said fuel injector (5) to commence said multi-split fuel injection when an air-to-fuel ratio in said combustion chamber (4) which is obtained on the basis of said quantity of fuel and said quantity of intake air reaches above a prescribed air-to-fuel ratio.

**4.** An engine as defined in claim 1, whereon said control means (9, 11, 28, 32, 35) switches fuel injection to said blanket fuel injection at said point near top dead center of said compression stroke after a prescribed period of said multi-split fuel injection.

**5.** An engine as defined in claim 1, and further comprising an intake throttle valve (14) disposed in said intake passage (10) upstream from a juncture to said exhaust gas recirculation passage (23), wherein said control means (9, 11, 16, 28, 32, 35) controls said intake throttle valve (14) to operate to a closing side from a full open position thereof in an ordinary operating region of lower engine speeds and lower engine load and causes said fuel injector to deliver fuel through said multi-split fuel injection when said engine (1) changes its drive state from said ordinary drive state of lower engine speeds and lower engine loads to said accelerative drive state.

**6.** An engine a as defined in claim 1, and further comprising a turbosupercharger (25) which comprises a turbine (21) driven by exhaust gas from said engine (1) and a blower (12) operationally connected to said turbine (21) for rotation together with said turbine (21) and operative to compress intake air introduced into said intake passage (10).

**7.** An engine as defined in claim 6, and further comprising a common-rail type of fuel injection system (5, 6, 6a, 8) having a common-rail (6) for accumulating fuel pressurized higher than injection pressure to which said fuel injectors (5) are connected, a sensor (11) operative to detect a quantity of intake air introduced into said intake passage (10), a turbosupercharger comprising a turbine and a blower which is disposed in said intake passage (10) and operative to compress intake air introduced into said intake passage (10), and an intake throttle valve (14) disposed in said intake passage (10) upstream from a juncture to said exhaust gas recirculation passage (23), wherein said control means (9, 11, 16, 28, 32, 35) feedback controls said exhaust gas recirculation valve (24) so as to attain a valve lift with which an air-to-fuel ratio in said combustion chamber (4) which is obtained on the basis of said quantity of fuel and said quantity of intake air is converged at a target air-to-fuel ratio prescribed according to engine operating conditions, controls said intake throttle valve (14) to operate to a closing side from a full open position thereof while said engine (1) operates in an ordinary operating region of lower engine speeds and lower engine load, and causes said fuel injector to deliver fuel through said multi-split fuel injection when said engine (1) changes its drive state from said ordinary drive state of lower engine speeds and lower engine loads to said accelerative drive state.

**8.** An engine as defined in claim 1, wherein said control means (9, 11, 28, 32, 35) causes said fuel injector (5) to deliver fuel through said multi-split fuel injection while said engine (1) operates in an engine operating region where an exhaust gas recirculation ratio of a quantity of exhaust gas that is admitted into an intake air stream relative to a total quantity of exhaust gas from said engine (1) is lower than a reference ratio.

**9.** An engine as defined in claim 8, and further comprising a sensor (11) operative to detect a quantity of intake air introduced into said intake passage (10), wherein said control means (9, 11, 28, 32, 35) feedback controls said exhaust gas recirculation valve (24) so as to attain a valve lift with which an air-to-fuel ratio in said combustion chamber (4) which is obtained on the basis of said quantity of fuel and said quantity of intake air is converged at a target air-to-fuel ratio prescribed according to engine operating conditions, and said engine operating region is a region where said air-to-fuel ratio in said combustion chamber (4) is higher than a prescribed ratio.

**10.** An engine as defined in claim 8, wherein said control means (9, 11, 28, 32, 35) causes said fuel injector (5) to deliver fuel through said multi-split fuel injection while said engine (1) operates in an engine operating region of lower engine speeds.

**11.** An engine as defined in claim 8, wherein said control means (9, 11, 28, 32, 35) causes said fuel injector (5) to deliver fuel through blanket fuel injection at a point near top dead center of a compression stroke of each said cylinder in an engine operating region where said exhaust gas recirculation ratio is higher than said reference ratio.

**12.** An engine as defined in claim 1, wherein said control means (9, 11, 28, 32, 35) causes said fuel injector (5) to deliver fuel through said multi-split fuel injection while said engine (1) operates in an engine operating region of lower engine speeds and higher than moderate engine loads during execution of said exhaust gas recirculation.

**13.** An engine as defined in claim 12, wherein said control means (9, 11, 28, 32, 35) causes said fuel injector (5) to deliver fuel through said multi-split fuel injection, more than one thirds of a full quantity of fuel that be delivered in one combustion cycle of each said cylinder (2) through said early split fuel injection before a crank angle 30? before top dead center of a compression stroke of said combustion cycle and the remaining quantity of fuel through said later split fuel injection at a point near said top dead center of said compression stroke.

**14.** An engine as defined in claim 12, and further comprising a sensor (11) operative to detect a quantity of intake air introduced into said intake passage (10), wherein said control means (9, 11, 28, 32, 35) feedback controls said exhaust gas recirculation valve (24) so as to attain a valve lift with which an air-to-fuel ratio in said combustion chamber (4) which is obtained on the basis of said quantity of fuel and said quantity of intake air is converged at a target air-to-fuel ratio.

**Patentansprüche**

**1.** Direkteinspritzungs-Brennkraftmaschine mit Kraftstoffeinspritzeinrichtungen (5), welche in Betrieb sind bzw. arbeiten, um Kraftstoff in Verbrennungskammern (4) von Zylindern (2) zu liefern, und mit einem Abgas-Rezirkulationsdurchtritt (23), durch welchen Abgas teilweise in einen Ansaug- bzw. Einlaßluftstrom in einen Ansaug- bzw. Einlaßdurchtritt (10) zugelassen wird, einem Abgas-Rezirkulationsventil (24), welches in Betrieb ist bzw. arbeitet, um eine Menge an Abgas zu regeln bzw. zu steuern, welche rezirkuliert wird, und Regel- bzw. Steuermitteln (9, 11, 28, 32, 35) zum Regeln bzw. Steuern der Menge an Kraftstoff, welche durch die Krafstoffeinspritzeinrichtung in Übereinstimmung mit einem Weg eines Beschleunigers bzw. eines Gaspedals geliefert wird, und zum Regeln bzw. Steuern eines Ventilhubs des Abgas-Rezirkulationsventils, so daß sich eine Variable betreffend eine Abgas-Rezirkulation einem Zielwert annähert, welcher entsprechend Motorbetriebsbedingungen beschrieben bzw. vorbestimmt ist, **gekennzeichnet dadurch:**

> **daß** die Regel- bzw. Steuermittel (9, 11, 28, 32, 35) bewirken, daß sich das Abgas-Rezirkulationsventil (24) zu einer Ventilschließseite bewegt, wenn der Motor (1) seinen Fahrzustand von einem gewöhnlichen Fahrzustand zu einem beschleunigenden Fahrzustand verändert, und bewirken, daß jede Kraftstoffeinspritzeinrichtung (5) ein Liefern von Kraftstoff durch eine geteilte Kraftstoffeinspritzung beginnt, welche eine frühe Kraftstoffeinspritzung, welche eine Kraftstoffeinspritzung in einem Kompressionshub von jedem Zylinder (2) beendet, und eine spätere Kraftstoffeinspritzung beinhaltet, welche eine Kraftstoffeinspritzung an einem Punkt nahe einem oberen Totpunkt des Kompressionshubs durchführt, wenn der Motor (1) seinen Fahrzustand von dem gewöhnlichen Fahrzustand zu dem beschleunigenden Fahrzustand ändert.

**2.** Motor nach Anspruch 1 und weiterhin umfassend Detektionsmittel bzw. -einrichtungen (26, 35) zum Detektieren bzw. Feststellen, daß das Abgas-Rezirkulationsventil (24) sich zu der Ventilschließseite bewegt hat, worin die Regel- bzw. Steuermittel (9, 11, 28, 32, 35) bewirken, daß die Kraftstoffeinspritzeinrichtung (5) die mehrfach unterteilte Kraftstoffeinspritzung beginnt, wenn die Detektionsmittel (26, 35) ein Schließen des Abgas-Rezirkulationsventils (24) zu der Ventilsschließseite detektieren.

**3.** Motor nach Anspruch 1 und weiterhin umfassend einen Sensor (11), welcher arbeitet, um eine Menge an Einlaßluft zu detektieren, welche in den Einlaßdurchtritt (10) eingebracht wird, worin die Regel- bzw. Steuermittel (9, 11, 28, 32, 35) bewirken, daß die Kraftstoffeinspritzeinrichtung (5) die mehrfach unterteilte Kraftstoffeinspritzung beginnt, wenn ein Luft-Kraftstoff-Verhältnis in der Verbrennungskammer (4), welches auf der Basis der Menge an Kraftstoff und der Menge an Einlaßluft erhalten wird, über ein vorbestimmtes Luft-Kraftstoff-Verhältnis gelangt.

**4.** Motor nach Anspruch 1, worin die Regel- bzw. Steuermittel (9, 11, 28, 32, 35) eine Kraftstoffeinspritzung zu der Abschluß- bzw. Überlagerungskraftstoffeinspritzung an dem Punkt nahe dem oberen Totpunkt des Kompressionshubs nach einer vorbestimmten Periode der mehrfach unterteilten Kraftstoffeinspritzung umschalten.

**5.** Motor nach Anspruch 1 und weiterhin umfassend ein Ansaug- bzw. Einlaßdrosselventil (14), welches in dem Ansaug- bzw. Einlaßquerschnitt (10) stromaufwärts von einem Anschluß bzw. einer Verbindung an den Abgas-Rezirkulationsdurchtritt (23) angeordnet ist, worin die Regel- bzw. Steuermittel (9, 11, 16, 28, 32, 35) das Einlaßdrosselventil (14) regeln bzw. steuern, um sich zu einer Schließseite von einer vollständig offenen Position davon in einem normalen bzw. gewöhnlichen Betriebs- bzw. Betätigungsbereich von niedrigeren Motordrehzahlen und niedrigerer Motorlast zu betätigen bzw. zu bewegen, und bewirken, daß die Kraftstoffeinspritzeinrichtung Kraftstoff durch die mehrfach unterteilte Kraftstoffeinspritzung liefert bzw. zuführt, wenn der Motor (1) seinen Fahrzustand von dem gewöhnlichen Fahrzustand mit niedrigeren Motordrehzahlen und niedrigeren Motorlasten zu dem beschleunigenden Fahrzustand ändert.

**6.** Motor nach Anspruch 1 und weiterhin umfassend einen Turbolader (25), welcher eine Turbine (21), welche durch Abgas von dem Motor (1) angetrieben ist, und einen Verdichter bzw. Auflader (12) umfaßt, welcher betrieblich mit der Turbine (21) für eine Rotation gemeinsam mit der Turbine (21) verbunden ist und arbeitet, um Einlaß- bzw. Ansaugluft zu komprimieren, welche in den Einlaß- bzw. Ansaugdurchtritt (10) eingebracht wird.

**7.** Motor nach Anspruch 6 und weiterhin umfassend einen Common-Rail-Typ bzw. Speichereinspritzungs-Typ von Kraftstoffeinspritzsystemen (5, 6, 6a, 8) mit gemeinsamen Druckleitungen, welche eine gemeinsame Druckleitung (6) zum Speichern von Kraftstoff unter Druck höher als ein Einspritzdruck, mit welcher die Kraftstoffeinspritzungen (5) verbunden sind, einen Sensor (11), welcher arbeitet, um eine Menge an Ansaug- bzw. Einlaßluft zu detektieren, welche in den Einlaßdurchtritt (10) aufgenommen wird, einen Turbolader, welcher eine Turbine und einen Verdichter umfaßt, welcher in dem Ansaugdurchtritt (10) angeordnet ist und arbeitet, um Einlaßluft zu komprimieren, welche in den Einlaßdurchtritt (10) eingebracht wird, und ein Einlaßdrosselventil (14) aufweist, welches in dem Einlaßdurchtritt (10) stromaufwärts von einer Verbindung mit der Abgas-Rezirkulationsleitung (23) angeordnet ist, wobei die Regel- bzw. Steuermittel (9, 11, 16, 28, 32, 35) das Abgas-Rezirkulationsventil (24) feedbacksteuern bzw. -regeln, um einen Ventilhub zu erhalten, mit welchem ein Luft-Kraftstoff-Verhältnis in der Verbrennungskammer (4), welches auf der Basis der Menge an Kraftstoff und der Menge an Einlaßluft erhalten wird, sich einem Ziel-Luft-Kraftstoff-Verhältnis annähert, welches gemäß Motorbetriebsbedingungen vorgeschrieben ist, das Einlaßdrosselventil (14) regeln bzw. steuern, um es einer Schließseite von einer vollständigen öffnungsposition davon zu betätigen bzw. zu bewegen, während der Motor (1) in einem gewöhnlichen Betriebsbereich von niedrigeren Motordrehzahlen und niedrigerer Motorlast arbeitet, und bewirken, daß die Kraftstoffeinspritzeinrichtung Kraftstoff durch die mehrfach unterteilte Kraftstoffeinspritzung liefert, wenn der Motor (1) seinen Fahrzustand von seinem gewöhnlichen Fahrzustand von niedrigeren Motordrehzahlen und niedrigeren Motorlasten zu dem beschleunigenden Fahrzustand ändert.

**8.** Motor nach Anspruch 1, worin die Regel- bzw. Steuermittel (9, 11, 28, 32, 35) bewirken, daß die Kraftstoffeinspritzeinrichtung (5) Kraftstoff durch die mehrfach unterteilte Kraftstoffeinspritzung liefert bzw. zuführt, während der Motor (1) in einem Motorbetriebsbereich arbeitet, wo ein Abgas-Rezirkulationsverhältnis einer Menge von Abgas, welche in einen Ansaug- bzw. Einlaßluftstrom zugelassen wird, relativ zu einer Gesamtmenge an Abgas von dem Motor (1) geringer als ein Referenz- bzw. Bezugsverhältnis ist.

**9.** Motor nach Anspruch 8 und weiterhin umfassend einen Sensor (11), welcher arbeitet, um eine Menge an Einlaßluft zu detektieren, welche in den Einlaßdurchtritt (10) eingebracht wird, wobei die Regel- bzw. Steuermittel (9, 11, 28, 32, 35) das Abgas-Rezirkulationsventil (24) feedbackregeln bzw. -steuern, um einen Ventilhub zu erreichen, mit welchem ein Luft-Kraftstoff-Verhältnis in der Verbrennungskammer (4), welches auf der Basis der Menge an Kraftstoff und der Menge an Einlaßluft erhalten wird, sich einem Ziel-Luft-Kraftstoff-Verhältnis annähert, welches gemäß Motorbetriebsbedingungen vorgeschrieben ist, und der Motorbetriebsbereich ein Bereich bzw. eine Region ist, wo das Luft-Kraftstoff-Verhältnis in der Verbrennungskammer (4) höher als ein vorgeschriebenes Verhältnis ist.

**10.** Motor nach Anspruch 8, worin die Regel- bzw. Steuermittel (9, 11, 28, 32, 35) bewirken, daß die Kraftstoffeinspritzeinrichtung (5) Kraftstoff durch die mehrfach unterteilte Kraftstoffeinspritzung liefert, während der Motor (1) in einem Motorbetriebsbereich von niedrigeren Motordrehzahlen arbeitet.

**11.** Motor nach Anspruch 8, worin die Regel- bzw. Steuermittel (9, 11, 28, 32, 35) bewirken, daß die Kraftstoffeinspritzeinrichtung (5) Kraftstoff durch die Überlagerungskraftstoffeinspritzung an einem Punkt nahe dem oberen Totpunkt eines Kompressionshubs von jedem Zylinder in einem Motorbetriebsbereich liefert, wo das Abgas-Rezirkulationsverhältnis höher als das Referenz- bzw. Bezugsverhältnis ist.

**12.** Motor nach Anspruch 1, worin die Regel- bzw. Steuermittel (9, 11, 28, 32, 35) bewirken, daß die Kraftstoffeinspritzeinrichtung (5) Kraftstoff durch die mehrfach unterteilte Kraftstoffeinspritzung liefert, während der Motor (1) in einem Motorbetriebsbereich von niedrigeren Motordrehzahlen und höher als mittlere Motorlasten während einer Durchführung der Abgas-Rezirkulation arbeitet.

**13.** Motor nach Anspruch 12, worin die Regel- bzw. Steuermittel (9, 11, 28, 32, 35) bewirken, daß die Kraftstoffeinspritzeinrichtung (5) Kraftstoff durch die mehrfach unterteilte Kraftstoffeinspritzung liefert, wobei mehr als ein Drittel einer Gesamtmenge an Kraftstoff, welcher in einem Verbrennungszyklus jedem Zylinder (2) zuzuführen ist, durch die frühe unterteilte Kraftstoffeinspritzung vor einem Kurbelwellenwinkel 30° vor dem oberen Totpunkt eines Kompressionshubs des Verbrennungszyklus und die verbleibende Menge an Kraftstoff durch die spätere unterteilte Kraftstoffeinspritzung an einem Punkt nahe dem oberen Totpunkt des Kompressionshubs zugeführt wird.

**14.** Motor nach Anspruch 12 und weiterhin umfassend einen Sensor (11), welcher arbeitet, um eine Menge an Einlaßluft zu detektieren, welche in den Einlaßdurchtritt (10) zugeführt wird, worin die Regel- bzw. Steuermittel (9, 11, 28, 32, 35) das Abgas-Rezirkulationsventil (24) feedbackregeln bzw. -steuern, um einen Ventilhub zu erhalten, mit welchem ein Luft-Kraftstoff-Verhältnis in der Verbrennungskammer (4), welches auf der Basis der Menge an Kraftstoff und der Menge an Einlaßluft erhalten wird, sich einem Ziel-Luft-Kraftstoff-Verhältnis annähert.

## Revendications

**1.** Moteur à combustion interne à injection directe muni d'injecteurs de carburant (5) opérationnels pour délivrer du carburant dans des chambres de combustion (4) de cylindres (2) et muni d'un passage de recyclage de gaz d'échappement (23) à travers lequel les gaz d'échappement sont en partie admis dans un flot d'air d'admission dans un passage d'admission (10), une soupape de recyclage de gaz d'échappement (24) opérationnelle pour commander une quantité de gaz d'échappement qui sont recyclés, et des moyens de commande (9, 11, 28, 32, 35) commandant la quantité de carburant délivrée par ledit injecteur de carburant selon le déplacement d'un accélérateur et commandant la levée de soupape de ladite soupape de recyclage de gaz d'échappement de sorte qu'une variable concernant le recyclage des gaz d'échappement converge vers une valeur cible prédéterminée selon des conditions de fonctionnement de moteur, **caractérisé par** :

lesdits moyens de commande (9, 11, 28, 32, 35) amenant ladite soupape de recyclage de gaz d'échappement (24) à fonctionner vers un côté de fermeture de soupape quand ledit moteur (1) change son état de commande d'un état de conduite ordinaire à un état de conduite accélérée, et amenant chaque dit injecteur de carburant (5) à commencer à délivrer du carburant par une injection de carburant en deux parties comprenant une première injection de carburant qui termine l'injection de carburant dans une course de compression de chaque dit cylindre (2) et une injection postérieure de carburant qui effectue l'injection de carburant au niveau d'un point près du point mort haut de ladite course de compression quand ledit moteur (1) change son état de conduite dudit état de conduite ordinaire audit état de conduite accélérée.

**2.** Moteur selon la revendication 1, et comprenant de plus des moyens de détection (26, 35) pour détecter que ladite soupape de recyclage de gaz d'échappement (24) a fonctionné vers ledit côté de fermeture de soupape, dans lequel lesdits moyens de commande (9, 11, 28, 32, 35) amènent ledit injecteur de carburant (5) à commencer ladite injection de carburant en plusieurs étapes lorsque lesdits moyens de détection (26, 35) détectent la fermeture de ladite soupape de recyclage de gaz d'échappement (24) vers ledit côté de fermeture de soupape.

**3.** Moteur selon la revendication 1, et comprenant de plus un capteur (11) opérationnel pour détecter une quantité d'air d'admission introduit dans ledit passage d'admission (10), dans lequel lesdits moyens de commande (9, 11, 28, 32, 35) amènent ledit injecteur de carburant (5) à commencer ladite injection de carburant en plusieurs étapes quand un rapport air-carburant dans ladite chambre de combustion (4), qui est obtenu sur la base de ladite quantité de carburant et de ladite quantité d'air d'admission, dépasse un rapport air-carburant prédéterminé.

**4.** Moteur selon la revendication 1, sur lequel lesdits moyens de commande (9, 11, 28, 32, 35) commutent l'injection de carburant sur ladite injection globale de carburant au niveau dudit point près du point mort haut de ladite course de compression après une période prédéterminée de ladite injection de carburant en plusieurs étapes.

**5.** Moteur selon la revendication 1, et comprenant de plus un papillon de gaz d'admission (14) disposé dans ledit passage d'admission (10) en amont d'une jonction avec ledit passage de recyclage de gaz d'échappement (23), dans lequel lesdits moyens de commande (9, 11, 16, 28, 32, 35) commandent le fonctionnement dudit papillon de gaz d'admission (14) vers un côté de fermeture à partir d'une position complètement ouverte de cette dernière dans une zone de fonctionnement ordinaire aux vitesses inférieures de moteur et aux charges inférieures de moteur, et amènent ledit injecteur de carburant à délivrer du carburant par ladite injection de carburant en plusieurs parties quand ledit moteur (1) change son état de conduite dudit état de conduite ordinaire aux vitesses inférieures de moteur et aux charges inférieures de moteur à l'état de conduite accélérée.

6. Moteur selon la revendication 1, et comprenant de plus un turbocompresseur (25) qui comprend une turbine (21) entraînée par les gaz d'échappement provenant dudit moteur (1) et une soufflante (12) reliée de manière opérationnelle à ladite turbine (21) pour tourner en même temps que ladite turbine (21) et opérationnelle pour comprimer l'air d'admission introduit dans ledit passage d'admission (10).

7. Moteur selon la revendication 6, et comprenant de plus un système d'injection de carburant (5, 6, 6a, 8) du type à rampe d'injection commune ayant une rampe d'injection commune (6) pour accumuler du carburant pressurisé à une pression supérieure à la pression d'injection à laquelle lesdits injecteurs de carburant (5) sont reliés, un capteur (11) opérationnel pour détecter une quantité d'air d'admission introduit dans ledit passage d'admission (10), un turbocompresseur comprenant une turbine et une soufflante qui est disposée dans ledit passage d'admission (10) et opérationnel pour comprimer l'air d'admission introduit dans ledit passage d'admission (10), et un papillon de gaz d'admission (14) disposé dans ledit passage d'admission (10) en amont d'une jonction avec ledit passage de recyclage de gaz d'échappement (23), dans lequel lesdits moyens de commande (9, 11, 16, 28, 32, 35) asservissent ladite soupape de recyclage de gaz d'échappement (24) de façon à atteindre une levée de soupape à laquelle un rapport air-carburant dans ladite chambre de combustion (4), qui est obtenu sur la base de ladite quantité de carburant et de ladite quantité d'air d'admission, converge vers un rapport air-carburant cible prédéterminé selon des conditions de fonctionnement de moteur, commandent le fonctionnement dudit papillon de gaz d'admission (14) vers un côté de fermeture à partir d'une position complètement ouverte de cette dernière tandis que ledit moteur (1) fonctionne dans une zone ordinaire de fonctionnement aux vitesses inférieures de moteur et aux charges inférieures de moteur, et amènent ledit injecteur de carburant à délivrer du carburant par ladite injection de carburant en plusieurs parties quand ledit moteur (1) change son état de conduite dudit état de conduite ordinaire aux vitesses inférieures de moteur et aux charges inférieures de moteur audit état de conduite accélérée.

8. Moteur selon la revendication 1, dans lequel lesdits moyens de commande (9, 11, 28, 32, 35) amènent ledit injecteur de carburant (5) à délivrer du carburant par ladite injection de carburant en plusieurs parties tandis que ledit moteur (1) fonctionne dans une zone de fonctionnement de moteur où un rapport de recyclage de gaz d'échappement d'une quantité de gaz d'échappement qui sont admis dans un flot d'air d'admission par rapport à une quantité totale de gaz d'échappement en provenance dudit moteur (1) est inférieur à un rapport de référence.

9. Moteur selon la revendication 8, et comprenant de plus un capteur (11) opérationnel pour détecter une quantité d'air d'admission introduit dans ledit passage d'admission (10), dans lequel lesdits moyens de commande (9, 11, 28, 32, 35) asservissent ladite soupape de recyclage de gaz d'échappement (24) de façon à atteindre une levée de soupape à laquelle un rapport air-carburant dans ladite chambre de combustion (4), qui est obtenu sur la base de ladite quantité de carburant et de ladite quantité d'air d'admission, converge vers un rapport air-carburant cible prédéterminé selon les conditions de fonctionnement de moteur, et ladite zone de fonctionnement de moteur est une zone dans laquelle ledit rapport air-carburant dans ladite chambre de combustion (4) est supérieur à un rapport prédéterminé.

10. Moteur selon la revendication 8, dans lequel lesdits moyens de commande (9, 11, 28, 32, 35) amènent ledit injecteur de carburant (5) à délivrer du carburant par ladite injection de carburant en plusieurs parties tandis que ledit moteur (1) fonctionne dans une zone de fonctionnement de moteur aux vitesses inférieures de moteur.

11. Moteur selon la revendication 8, dans lequel lesdits moyens de commande (9, 11, 28, 32, 35) amènent ledit injecteur de carburant (5) à délivrer du carburant par une injection globale de carburant au niveau d'un point près du point mort haut d'une course de compression de chaque dit cylindre dans une zone de fonctionnement de moteur dans laquelle ledit rapport de recyclage de gaz d'échappement est supérieur audit rapport de référence.

12. Moteur selon la revendication 1, dans lequel lesdits moyens de commande (9, 11, 28, 32, 35) amènent ledit injecteur de carburant (5) à délivrer du carburant par ladite injection de carburant en plusieurs parties tandis que ledit moteur (1) fonctionne dans une zone de fonctionnement de moteur aux vitesses inférieures de moteur et aux charges plus élevées que modérées de moteur pendant l'exécution dudit recyclage de gaz d'échappement.

13. Moteur selon la revendication 12, dans lequel lesdits moyens de commande (9, 11, 28, 32, 35) amènent ledit injecteur de carburant (5) à délivrer du carburant par ladite injection de carburant en plusieurs parties, plus d'un tiers d'une quantité totale de carburant à délivrer dans un seul cycle de combustion de chaque dit cylindre (2) par ladite première injection de carburant avant un angle de vilebrequin de 30° avant le point mort haut d'une course de compression dudit cycle de combustion, et la quantité restante de carburant par ladite injection postérieure de carburant au niveau d'un point près dudit point mort haut de ladite course de compression.

**14.** Moteur selon la revendication 12, et comprenant de plus un capteur (11) opérationnel pour détecter une quantité d'air d'admission introduit dans ledit passage d'admission (10), dans lequel lesdits moyens de commande (9, 11, 28, 32, 35) commandent par rétroaction ladite soupape de recyclage de gaz d'échappement (24) de façon à atteindre une levée de soupape à laquelle un rapport air-carburant dans ladite chambre de combustion (4), qui est obtenu sur la base de ladite quantité de carburant et de ladite quantité d'air d'admission, converge vers un rapport air-carburant cible.

FIG. 1

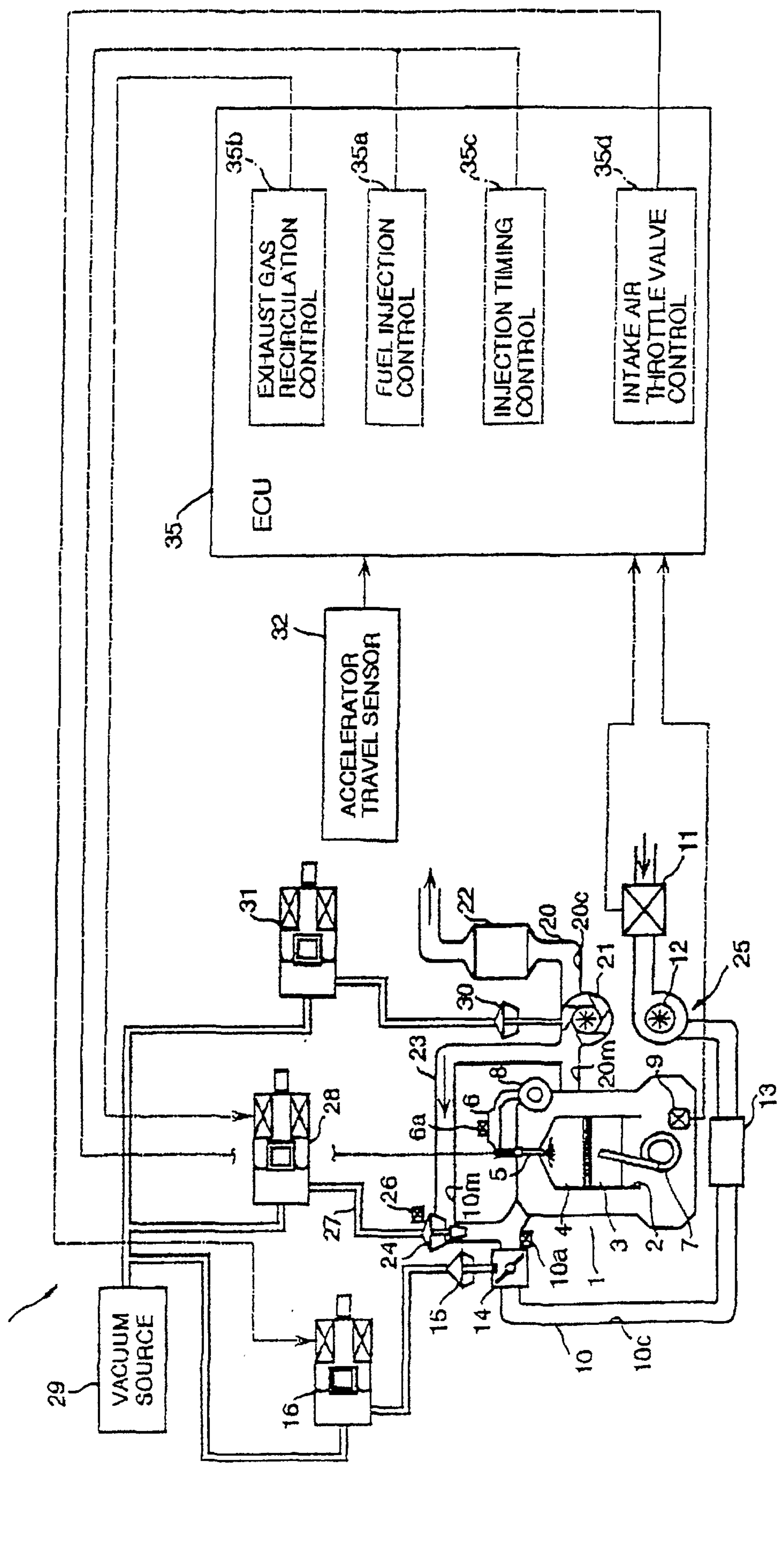
A
29
VACUUM SOURCE
16
15
14
10
10c
10a
1
24
27
26
10m
4
3
2
7
5
6a
6
28
8
9
13
23
20m
30
21
31
25
12
11
20c
20
22
ACCELERATOR TRAVEL SENSOR
32
35
ECU
EXHAUST GAS RECIRCULATION CONTROL
35b
FUEL INJECTION CONTROL
35a
INJECTION TIMING CONTROL
35c
INTAKE AIR THROTTLE VALVE CONTROL
35d

FIG. 2A

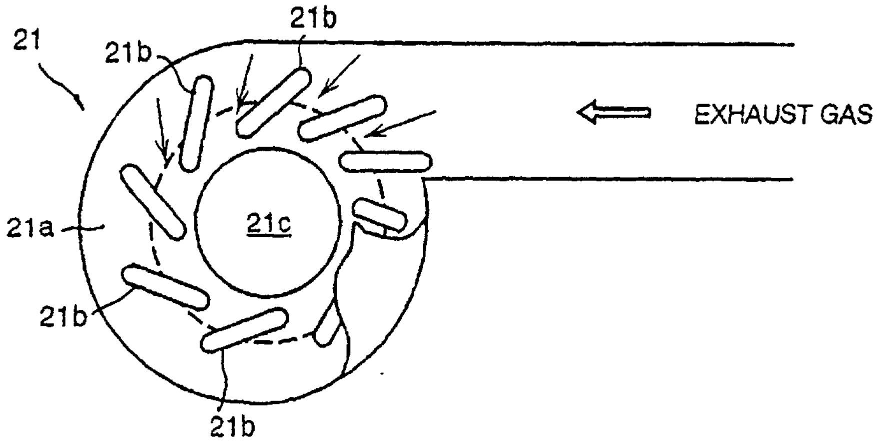
21
21b
21b
EXHAUST GAS
21a
21c
21b
21b

FIG. 2B

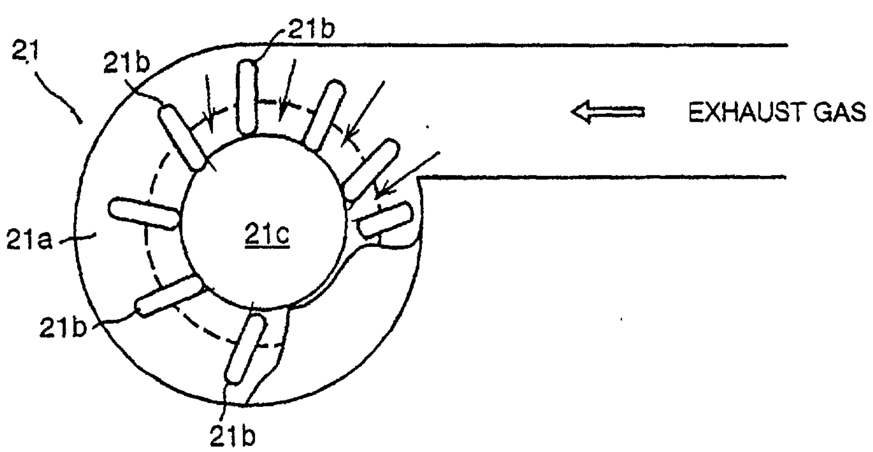
21
21b
21b
EXHAUST GAS
21a
21c
21b
21b

FIG. 3

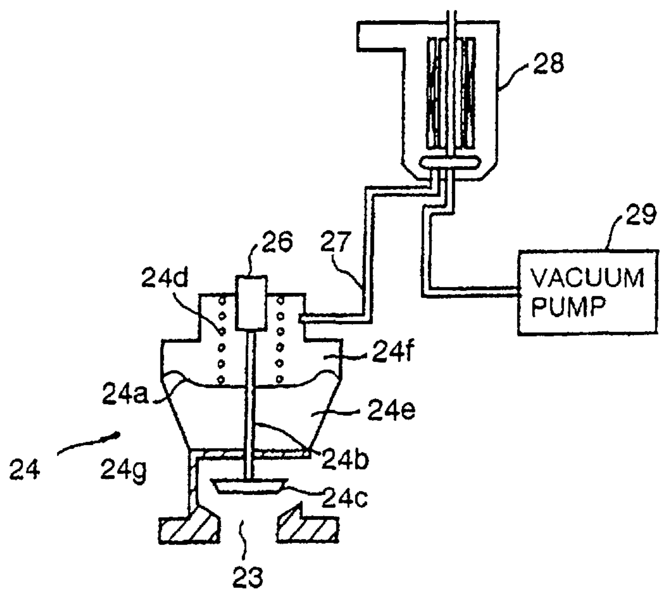

FIG. 4A

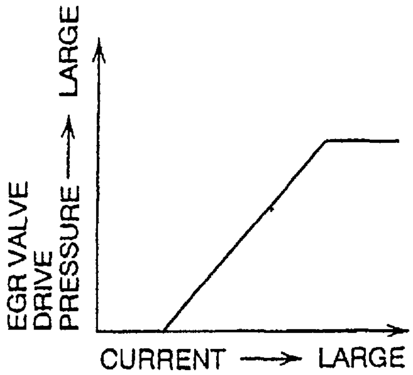
EGR VALVE DRIVE PRESSURE ⟶ LARGE
CURRENT ⟶ LARGE

FIG. 4B

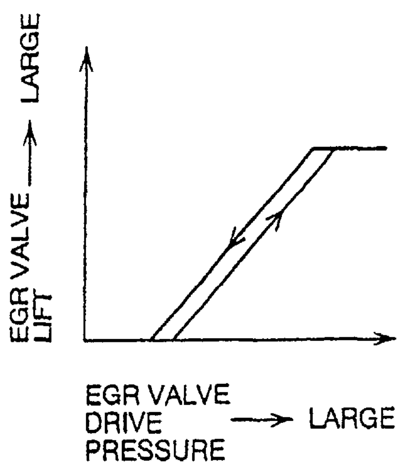
EGR VALVE LIFT ⟶ LARGE
EGR VALVE DRIVE PRESSURE ⟶ LARGE

FIG. 5

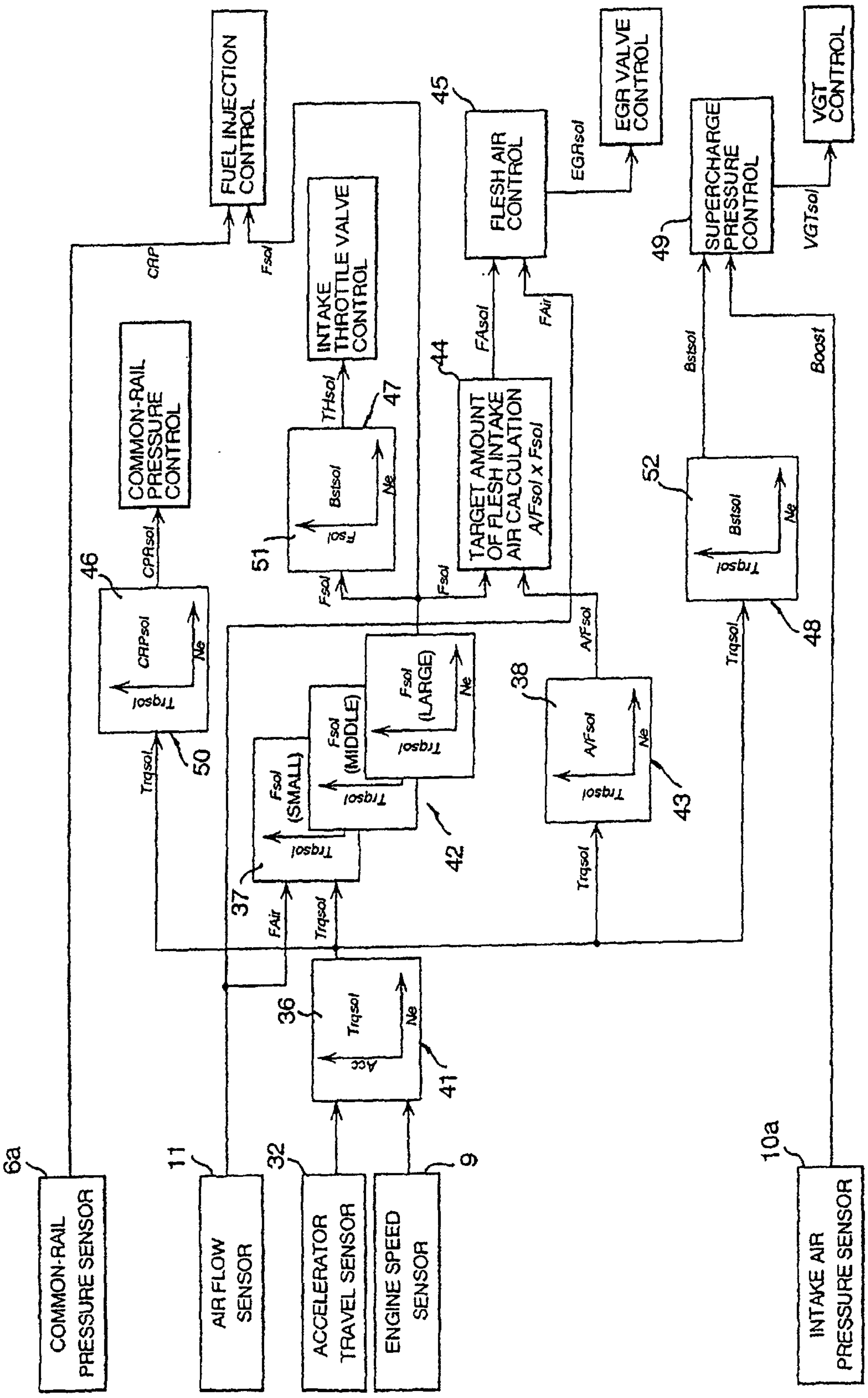
COMMON-RAIL PRESSURE SENSOR
6a
AIR FLOW SENSOR
11
ACCELERATOR TRAVEL SENSOR
32
ENGINE SPEED SENSOR
9
INTAKE AIR PRESSURE SENSOR
10a
36
41
Acc
Trqsol
Ne
FAir
Trqsol
37
Fsol (SMALL)
Fsol (MIDDLE)
Fsol (LARGE)
42
38
A/Fsol
43
46
CRPsol
50
CPRsol
COMMON-RAIL PRESSURE CONTROL
51
Fsol
Bstsol
47
THsol
INTAKE THROTTLE VALVE CONTROL
44
TARGET AMOUNT OF FLESH INTAKE AIR CALCULATION
A/Fsol x Fsol
FAsol
FAir
45
FLESH AIR CONTROL
EGRsol
EGR VALVE CONTROL
CRP
Fsol
FUEL INJECTION CONTROL
52
48
Bstsol
49
SUPERCHARGE PRESSURE CONTROL
Boost
VGTsol
VGT CONTROL

FIG. 6

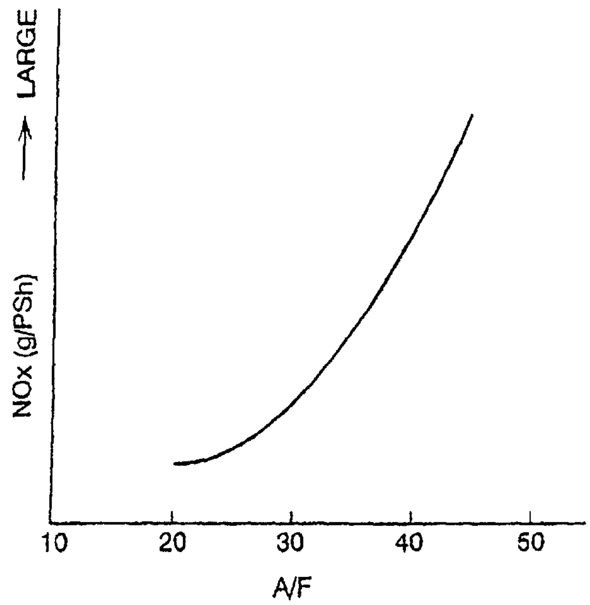
NOx (g/PSh) ⟶ LARGE
10
20
30
40
50
A/F

FIG. 7

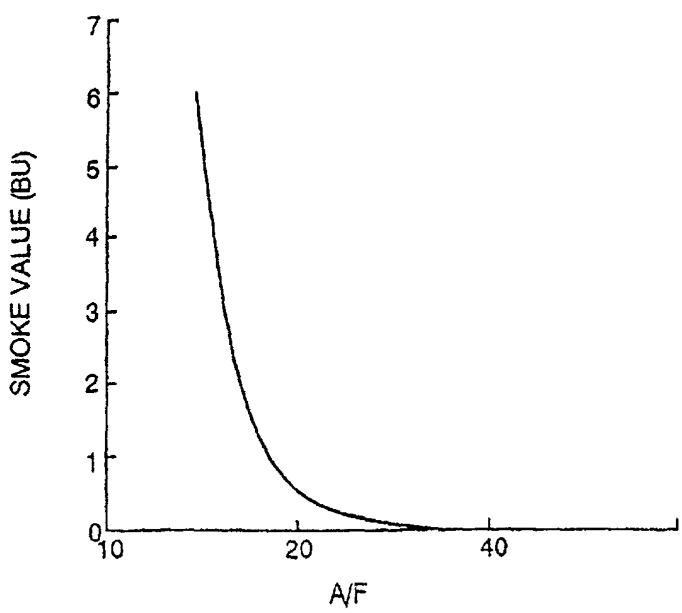
SMOKE VALUE (BU)
7
6
5
4
3
2
1
0
10
20
40
A/F

FIG. 8

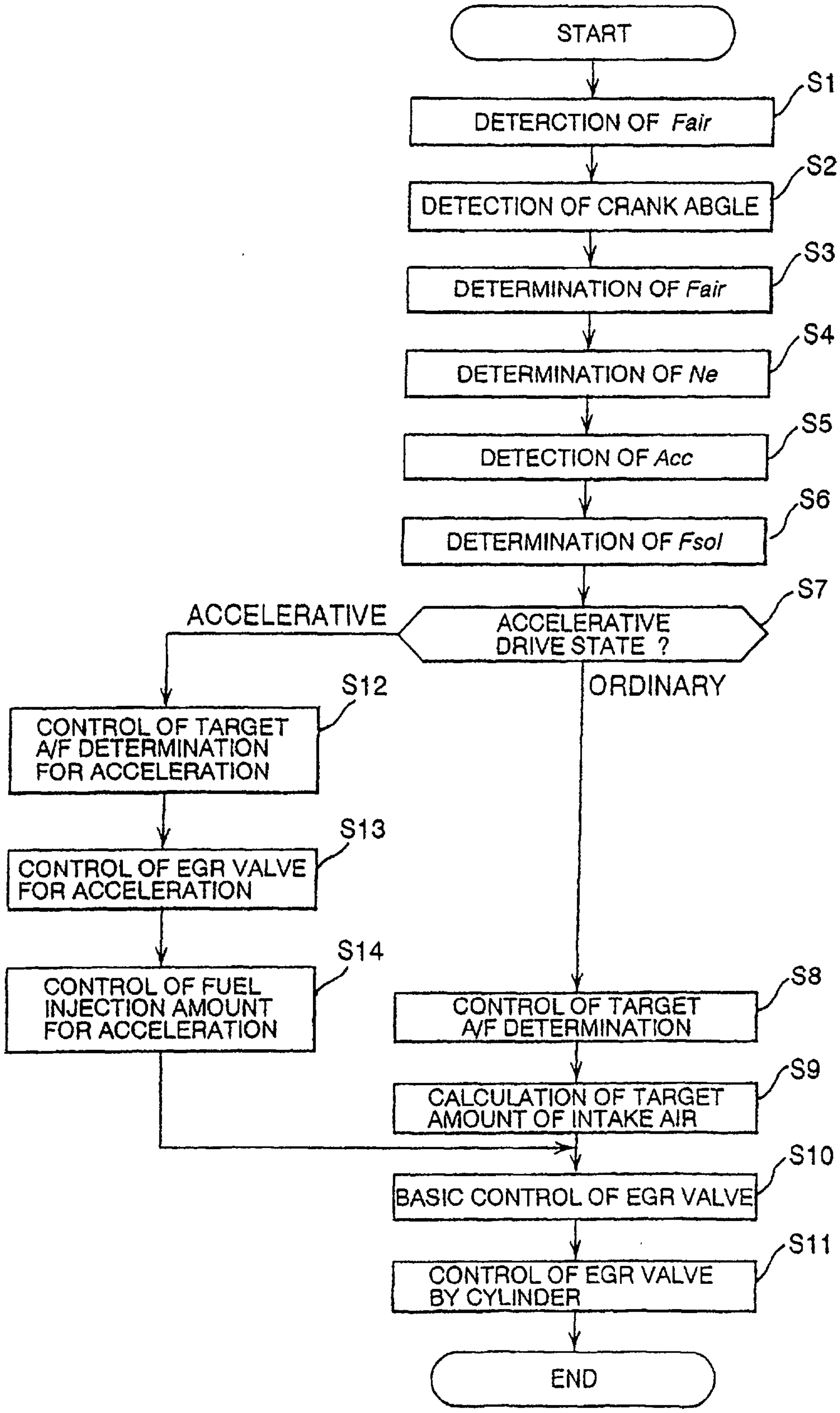
START
S1
DETERCTION OF Fair
S2
DETECTION OF CRANK ABGLE
S3
DETERMINATION OF Fair
S4
DETERMINATION OF Ne
S5
DETECTION OF Acc
S6
DETERMINATION OF Fsol
S7
ACCELERATIVE DRIVE STATE ?
ACCELERATIVE
ORDINARY
S12
CONTROL OF TARGET A/F DETERMINATION FOR ACCELERATION
S13
CONTROL OF EGR VALVE FOR ACCELERATION
S14
CONTROL OF FUEL INJECTION AMOUNT FOR ACCELERATION
S8
CONTROL OF TARGET A/F DETERMINATION
S9
CALCULATION OF TARGET AMOUNT OF INTAKE AIR
S10
BASIC CONTROL OF EGR VALVE
S11
CONTROL OF EGR VALVE BY CYLINDER
END

FIG. 9

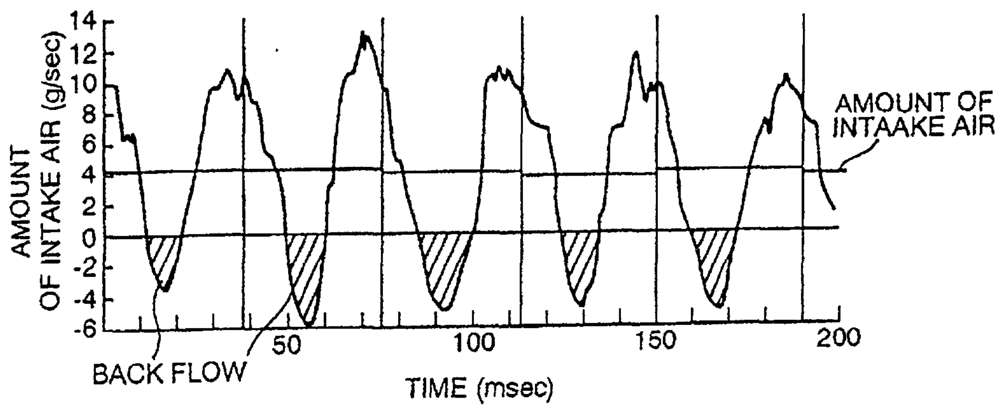
AMOUNT OF INTAKE AIR (g/sec)
14
12
10
8
6
4
2
0
-2
-4
-6
50
100
150
200
BACK FLOW
TIME (msec)
AMOUNT OF INTAAKE AIR

FIG. 10A

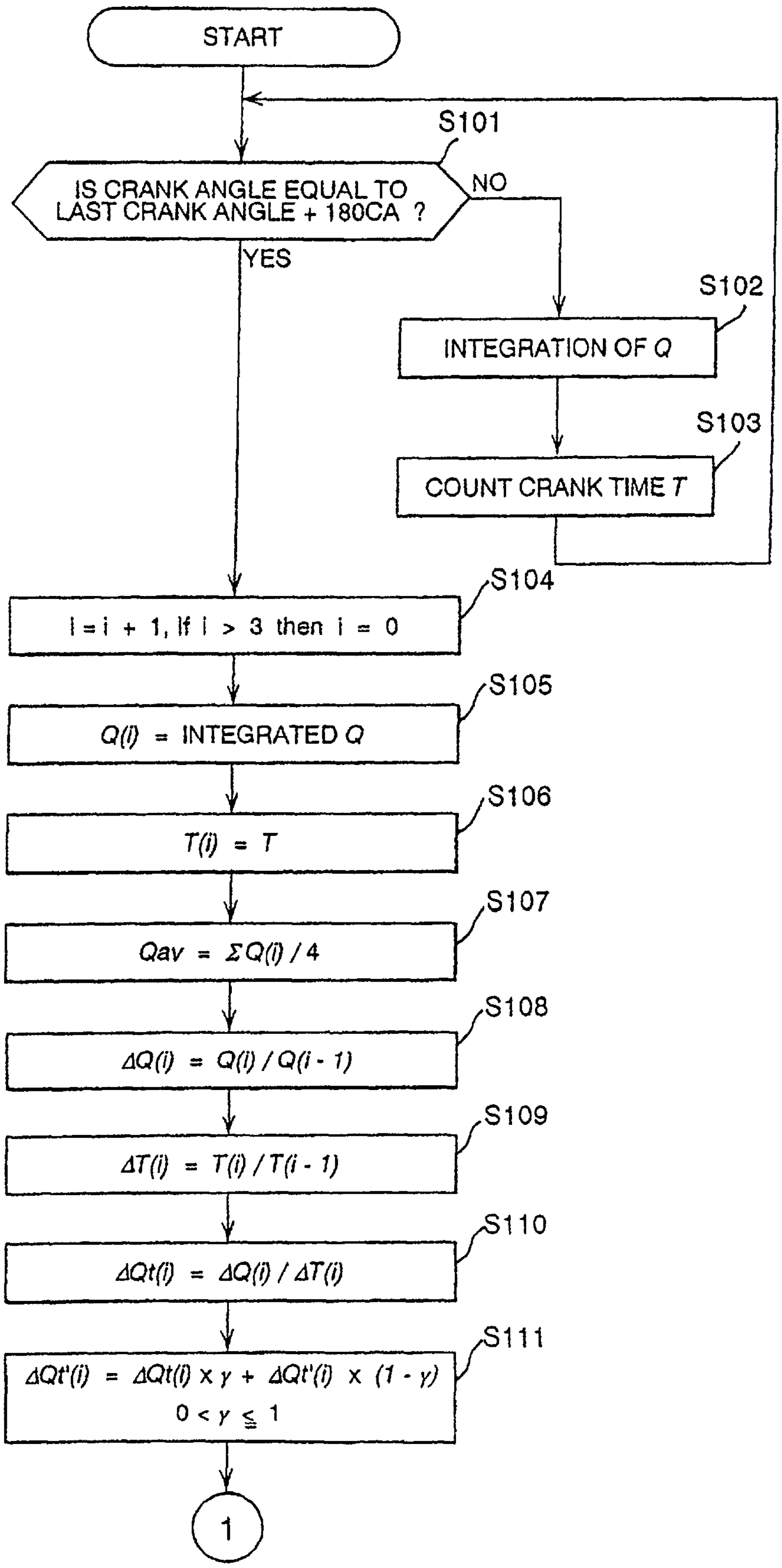
START
S101
IS CRANK ANGLE EQUAL TO LAST CRANK ANGLE + 180CA ?
NO
YES
S102
INTEGRATION OF Q
S103
COUNT CRANK TIME T
S104
i = i + 1, If i > 3 then i = 0
S105
Q(i) = INTEGRATED Q
S106
T(i) = T
S107
Qav = ΣQ(i) / 4
S108
ΔQ(i) = Q(i) / Q(i - 1)
S109
ΔT(i) = T(i) / T(i - 1)
S110
ΔQt(i) = ΔQ(i) / ΔT(i)
S111
ΔQt'(i) = ΔQt(i) x γ + ΔQt'(i) x (1 - γ)
0 < γ ≦ 1
1

FIG. 10B

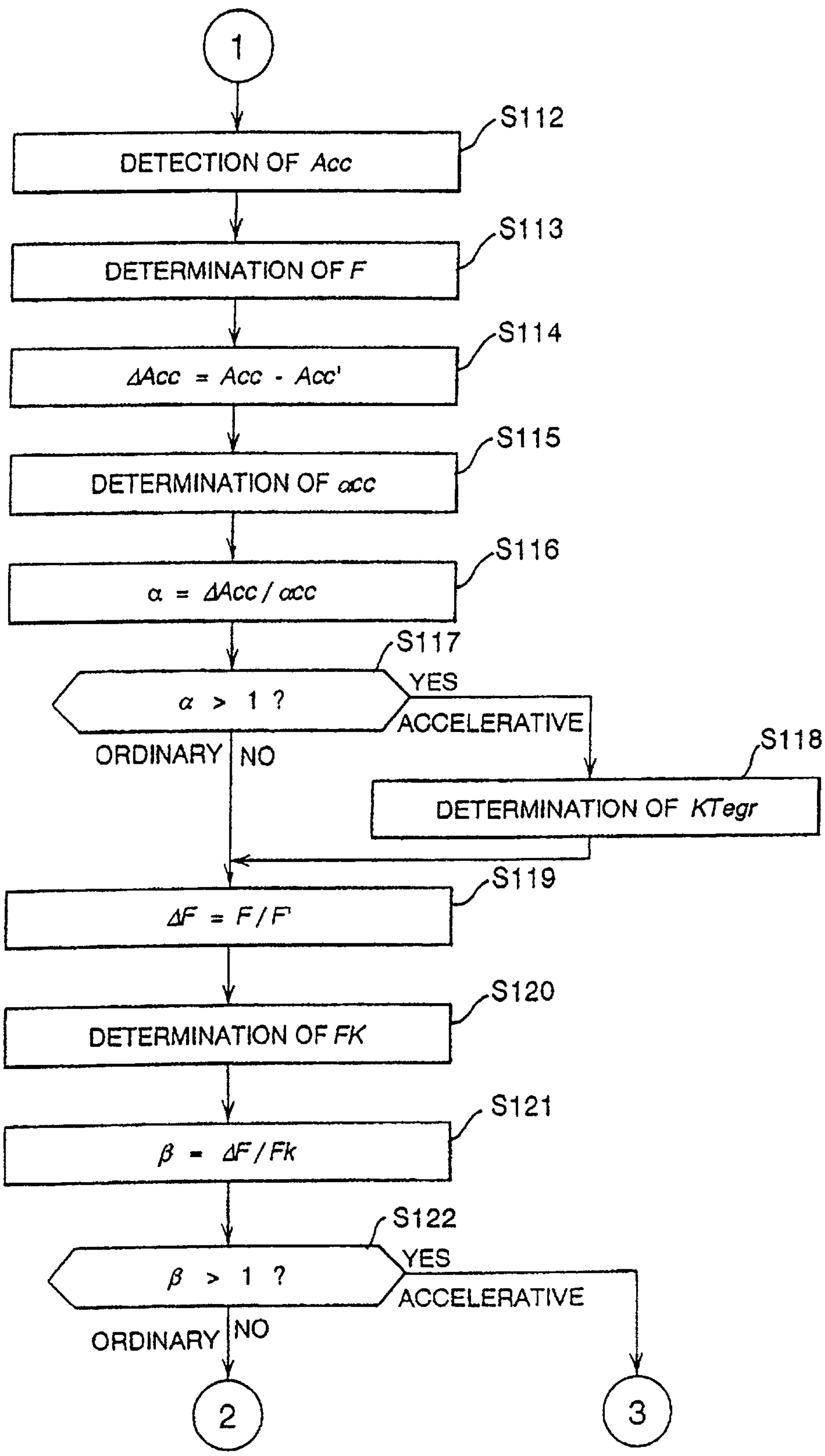

1
S112
DETECTION OF Acc
S113
DETERMINATION OF F
S114
ΔAcc = Acc - Acc'
S115
DETERMINATION OF αcc
S116
α = ΔAcc / αcc
S117
α > 1 ?
YES
ACCELERATIVE
ORDINARY
NO
S118
DETERMINATION OF KTegr
S119
ΔF = F / F'
S120
DETERMINATION OF FK
S121
β = ΔF / Fk
S122
β > 1 ?
YES
ACCELERATIVE
ORDINARY
NO
2
3

FIG. 10C

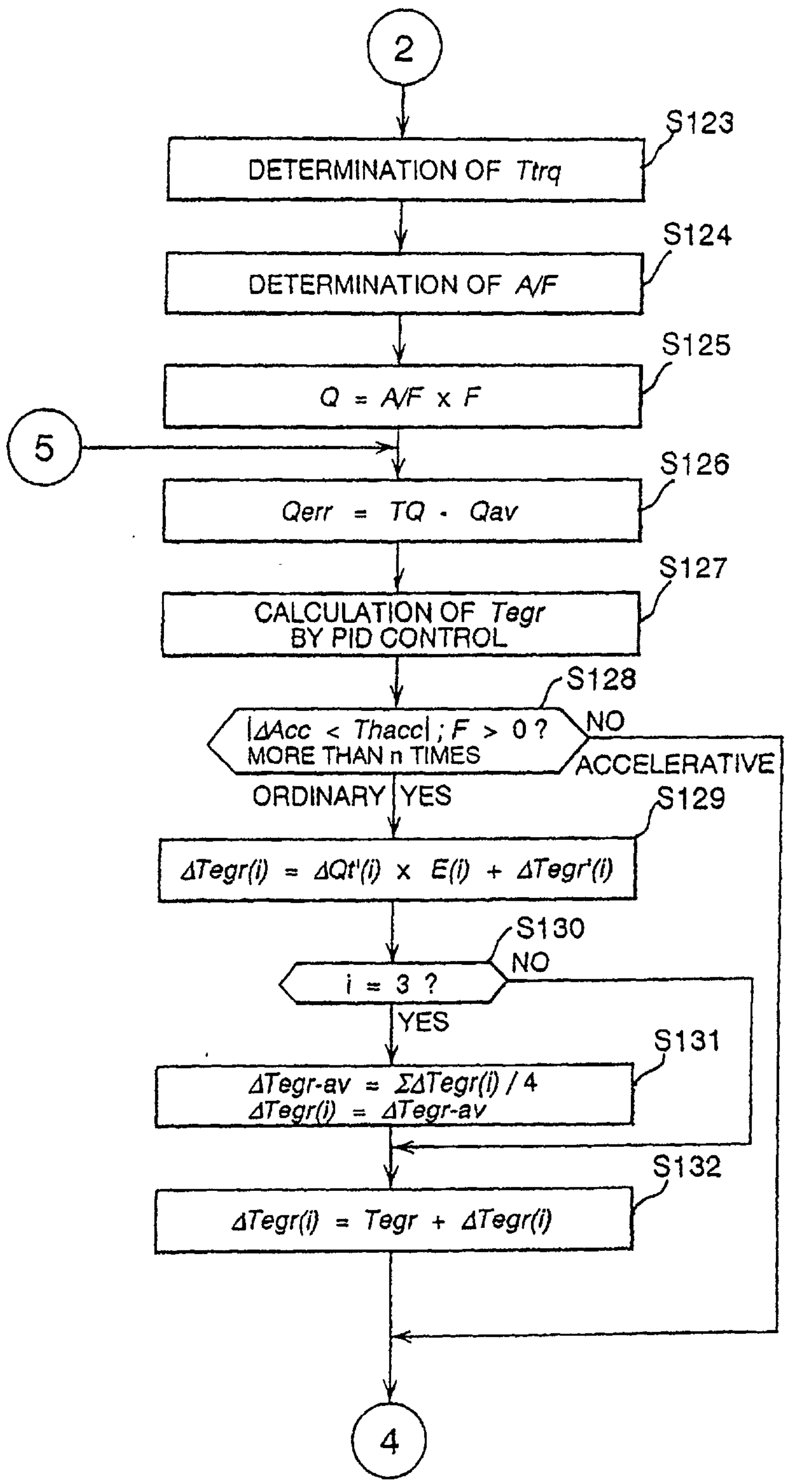
2
S123
DETERMINATION OF Ttrq
S124
DETERMINATION OF A/F
S125
Q = A/F x F
5
S126
Qerr = TQ - Qav
S127
CALCULATION OF Tegr BY PID CONTROL
S128
|ΔAcc < Thacc| ; F > 0 ? MORE THAN n TIMES
NO
ACCELERATIVE
ORDINARY
YES
S129
ΔTegr(i) = ΔQt'(i) x E(i) + ΔTegr'(i)
S130
NO
i = 3 ?
YES
S131
ΔTegr-av = ΣΔTegr(i) / 4
ΔTegr(i) = ΔTegr-av
S132
ΔTegr(i) = Tegr + ΔTegr(i)
4

FIG. 10D

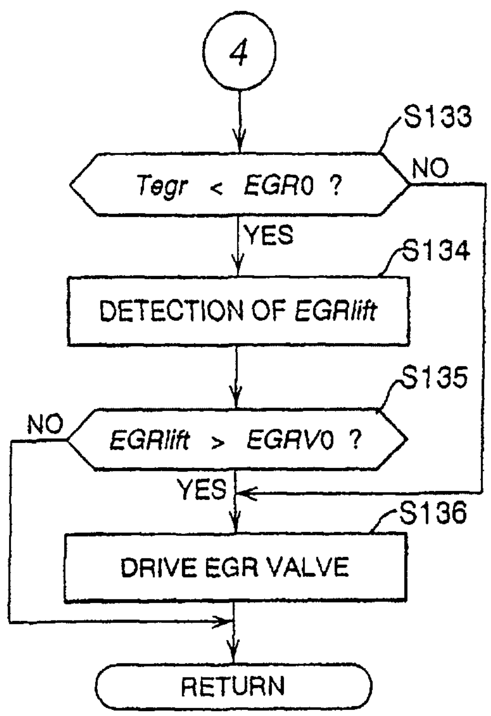
4
S133
Tegr < EGR0 ?
NO
YES
S134
DETECTION OF EGRlift
S135
NO
EGRlift > EGRV0 ?
YES
S136
DRIVE EGR VALVE
RETURN

FIG. 10E

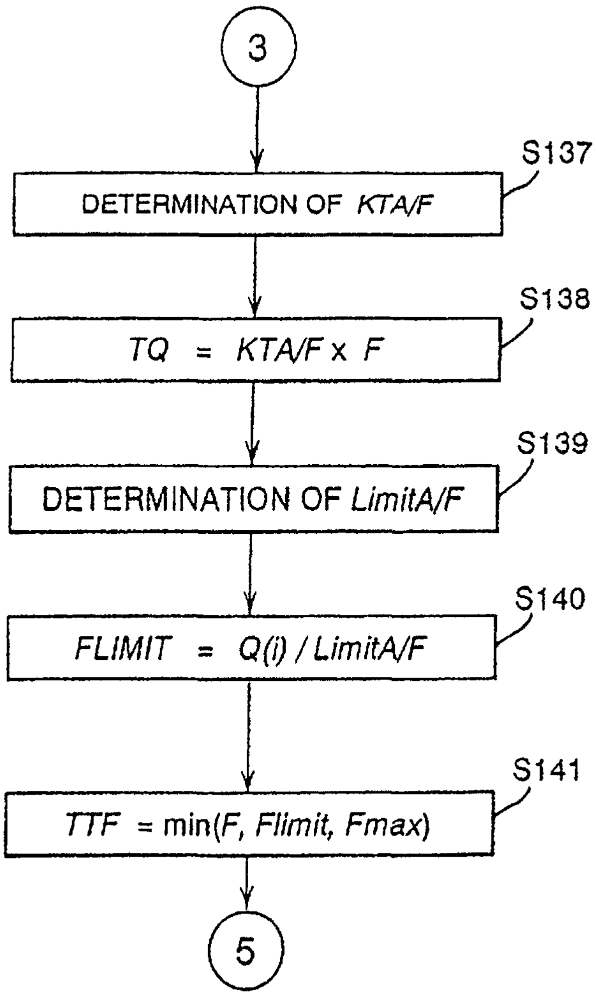
3
S137
DETERMINATION OF KTA/F
S138
TQ = KTA/F x F
S139
DETERMINATION OF LimitA/F
S140
FLIMIT = Q(i) / LimitA/F
S141
TTF = min(F, Flimit, Fmax)
5

FIG. 11

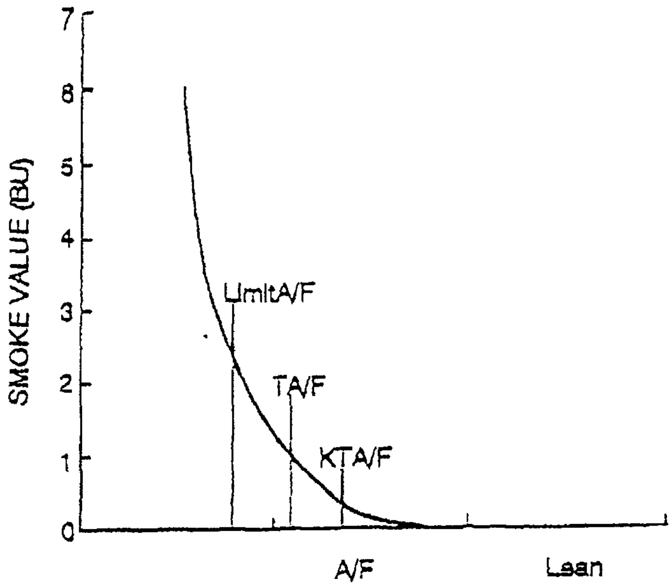
7
8
5
4
3
2
1
0
SMOKE VALUE (BU)
LimitA/F
TA/F
KTA/F
A/F
Lean

FIG. 13

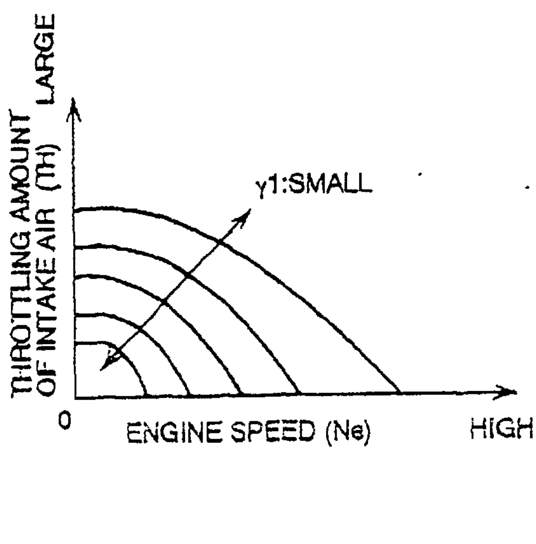
LARGE
THROTTLING AMOUNT
OF INTAKE AIR (TH)
γ1:SMALL
0
ENGINE SPEED (Ne)
HIGH

FIG. 12A

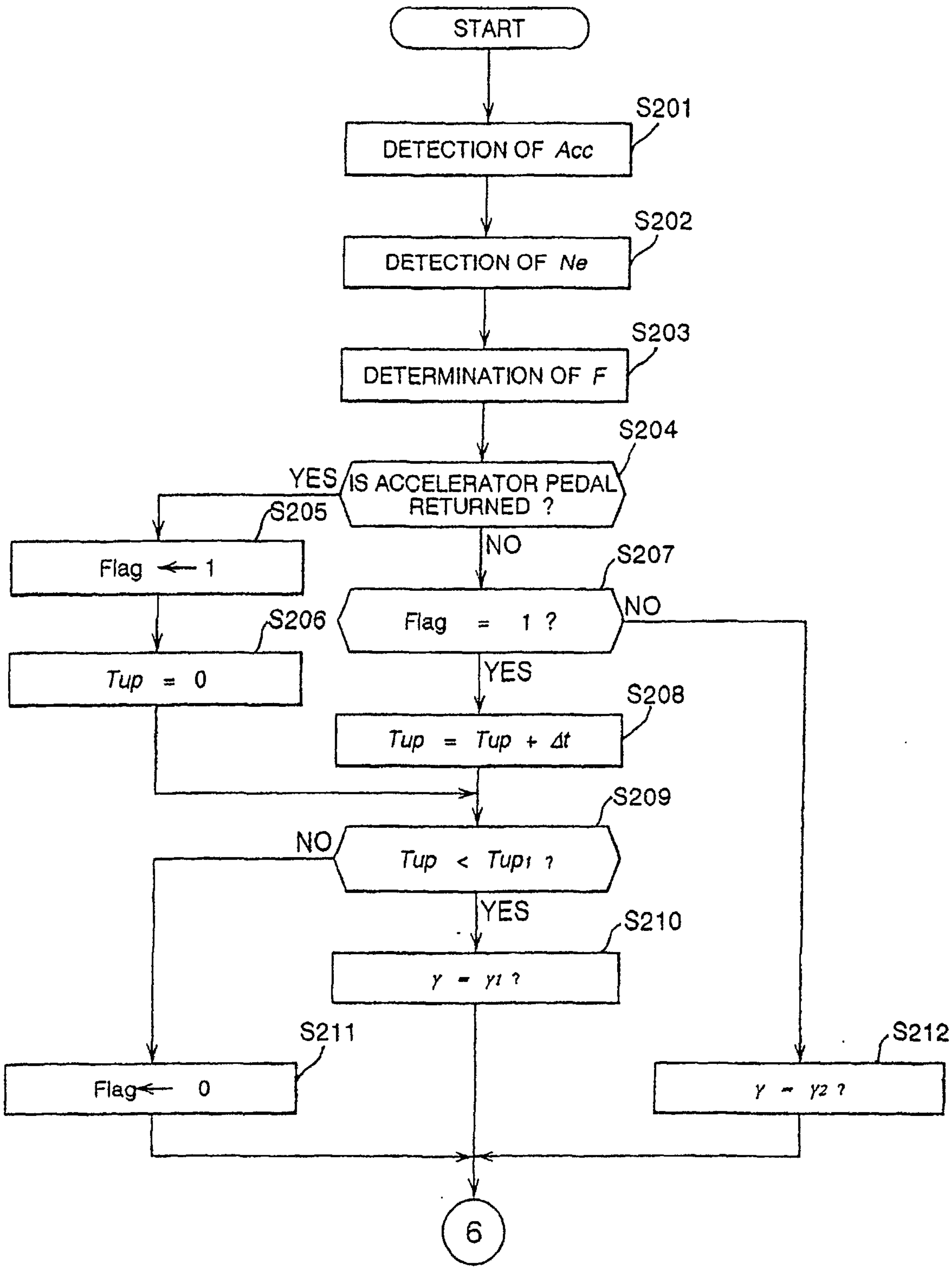
START
S201
DETECTION OF Acc
S202
DETECTION OF Ne
S203
DETERMINATION OF F
S204
IS ACCELERATOR PEDAL RETURNED ?
YES
NO
S205
Flag ← 1
S206
Tup = 0
S207
Flag = 1 ?
NO
YES
S208
Tup = Tup + Δt
S209
Tup < Tup1 ?
NO
YES
S210
γ = γ1 ?
S211
Flag ← 0
S212
γ = γ2 ?
6

FIG. 12B

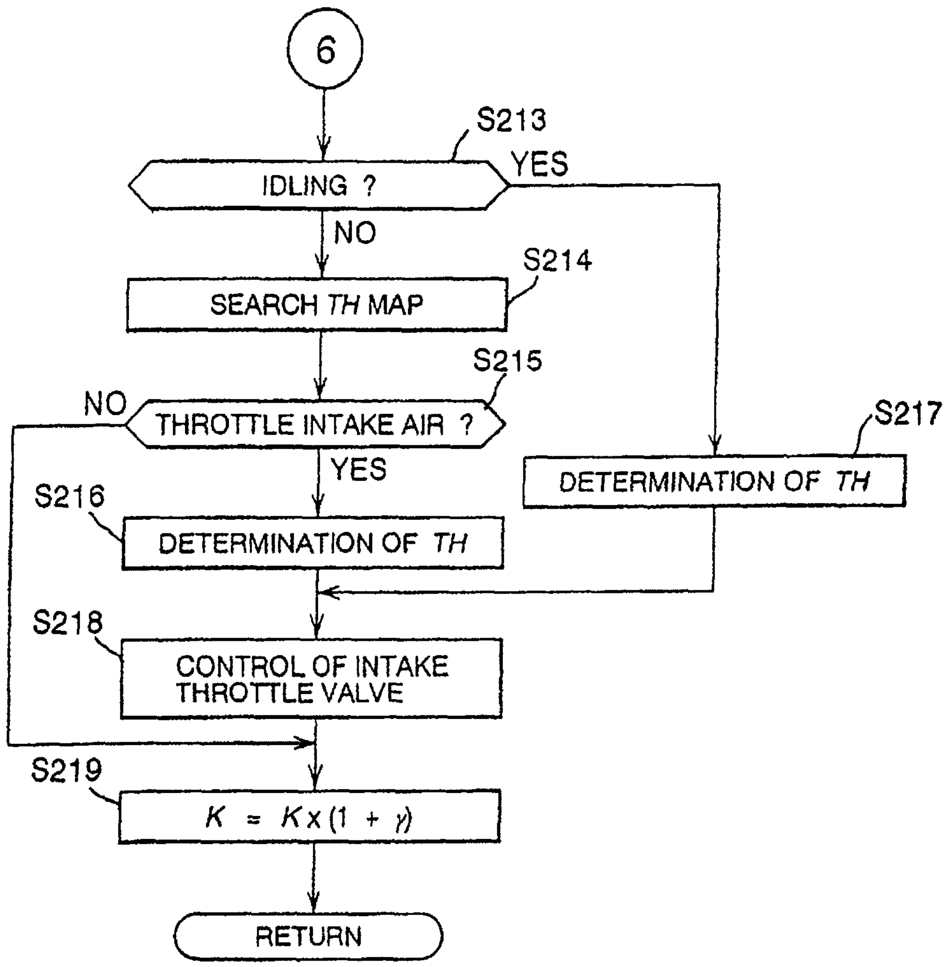
6
S213
IDLING ?
YES
NO
S214
SEARCH TH MAP
S215
NO
THROTTLE INTAKE AIR ?
YES
S217
DETERMINATION OF TH
S216
DETERMINATION OF TH
S218
CONTROL OF INTAKE THROTTLE VALVE
S219
K = K x (1 + γ)
RETURN

FIG. 14

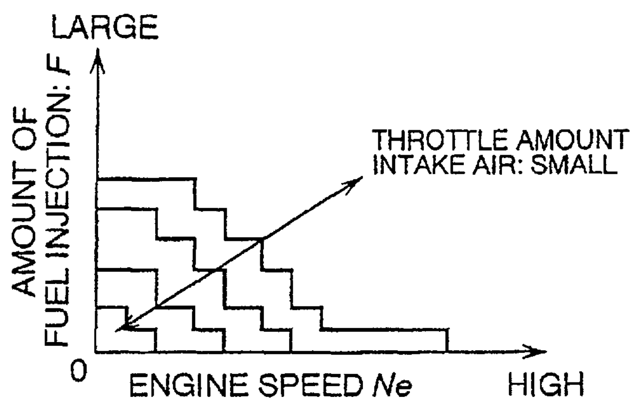
LARGE
AMOUNT OF
FUEL INJECTION: F
THROTTLE AMOUNT
INTAKE AIR: SMALL
0
ENGINE SPEED Ne
HIGH

FIG. 15

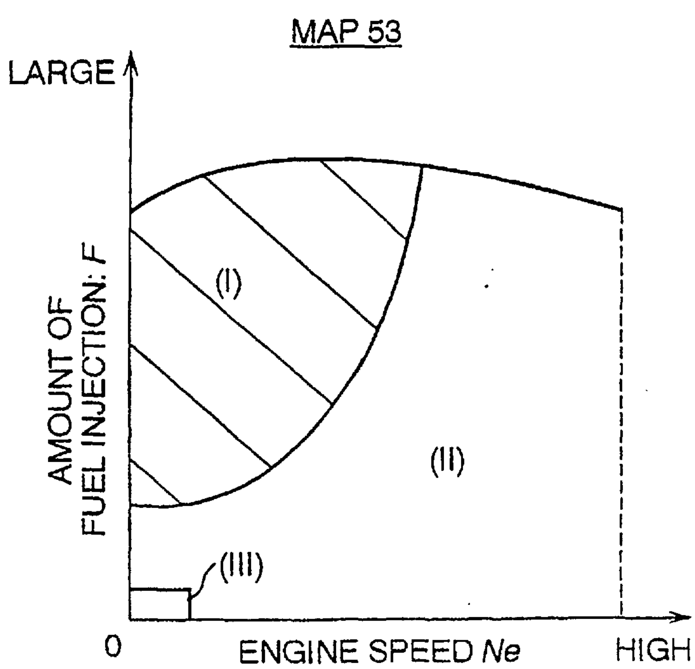
MAP 53
LARGE
AMOUNT OF
FUEL INJECTION: F
(I)
(II)
(III)
0
ENGINE SPEED Ne
HIGH

FIG. 16

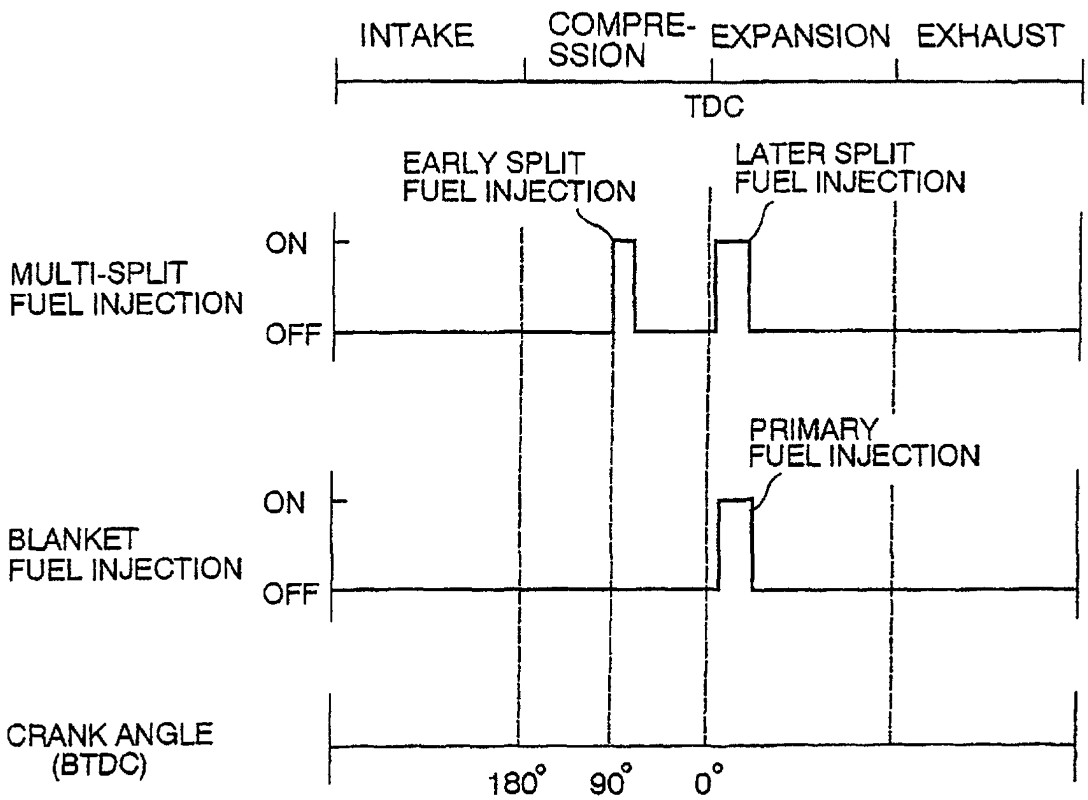
INTAKE
COMPRE-SSION
EXPANSION
EXHAUST
TDC
EARLY SPLIT FUEL INJECTION
LATER SPLIT FUEL INJECTION
ON
MULTI-SPLIT FUEL INJECTION
OFF
PRIMARY FUEL INJECTION
ON
BLANKET FUEL INJECTION
OFF
CRANK ANGLE (BTDC)
180°
90°
0°

FIG. 17A

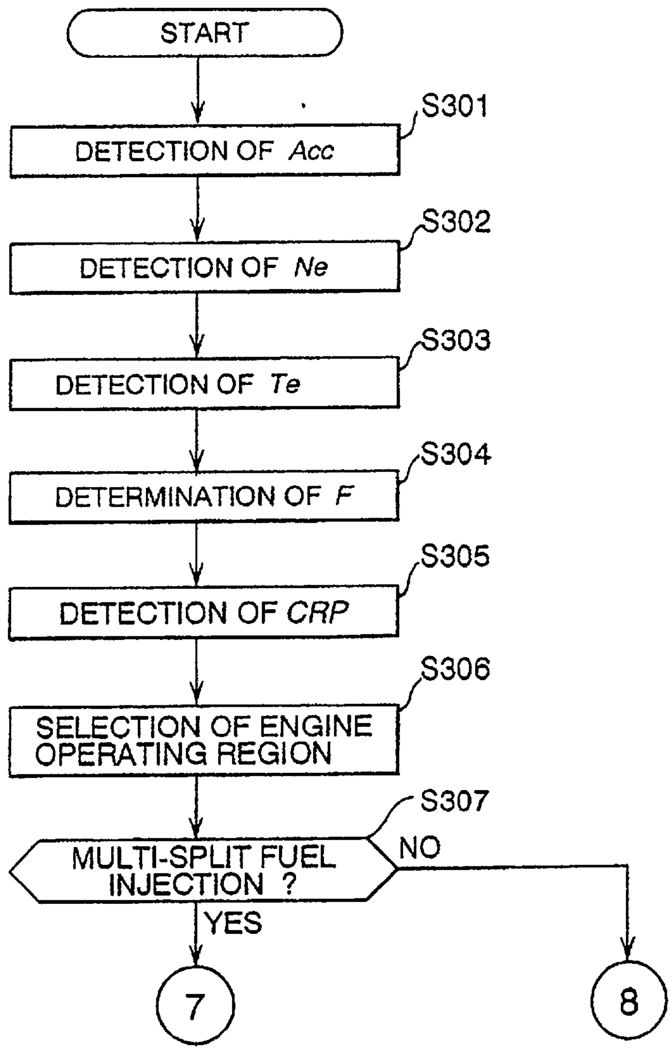
START
S301
DETECTION OF Acc
S302
DETECTION OF Ne
S303
DETECTION OF Te
S304
DETERMINATION OF F
S305
DETECTION OF CRP
S306
SELECTION OF ENGINE OPERATING REGION
S307
MULTI-SPLIT FUEL INJECTION ?
NO
YES
7
8

FIG. 17B

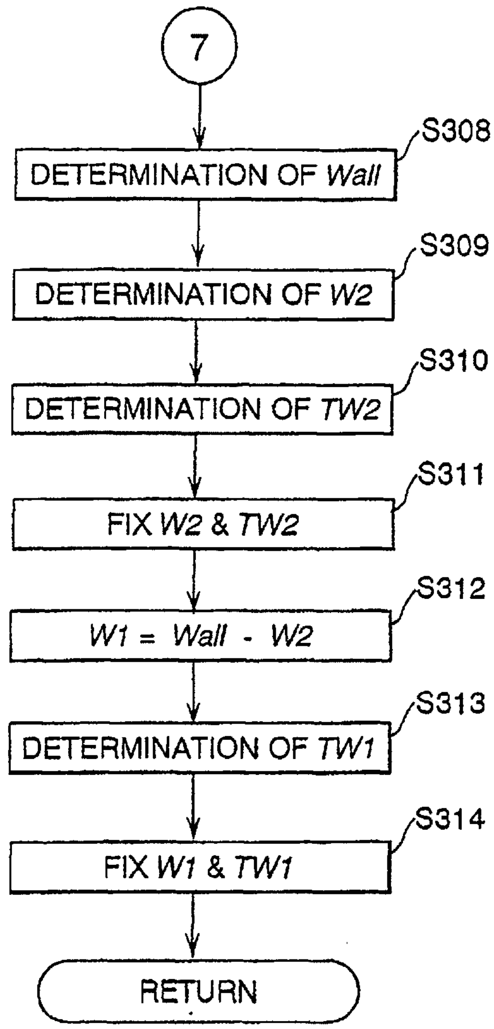
7
S308
DETERMINATION OF Wall
S309
DETERMINATION OF W2
S310
DETERMINATION OF TW2
S311
FIX W2 & TW2
S312
W1 = Wall - W2
S313
DETERMINATION OF TW1
S314
FIX W1 & TW1
RETURN

FIG. 17C

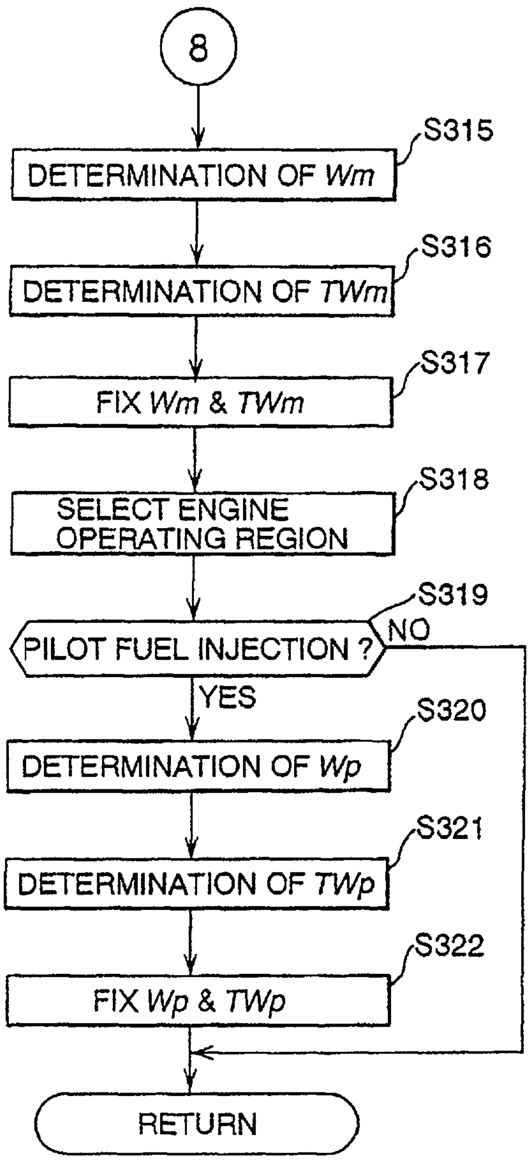
8
S315
DETERMINATION OF Wm
S316
DETERMINATION OF TWm
S317
FIX Wm & TWm
S318
SELECT ENGINE OPERATING REGION
S319
PILOT FUEL INJECTION ?
NO
YES
S320
DETERMINATION OF Wp
S321
DETERMINATION OF TWp
S322
FIX Wp & TWp
RETURN

FIG. 18

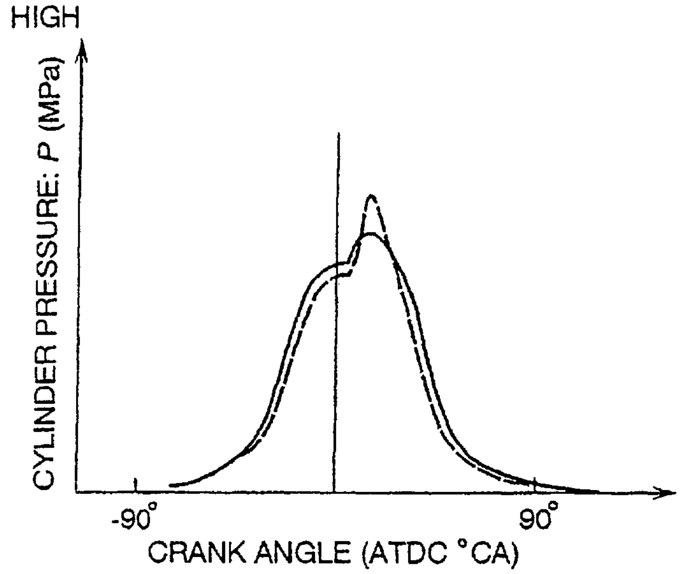
HIGH
CYLINDER PRESSURE: P (MPa)
-90°
90°
CRANK ANGLE (ATDC °CA)

FIG. 19

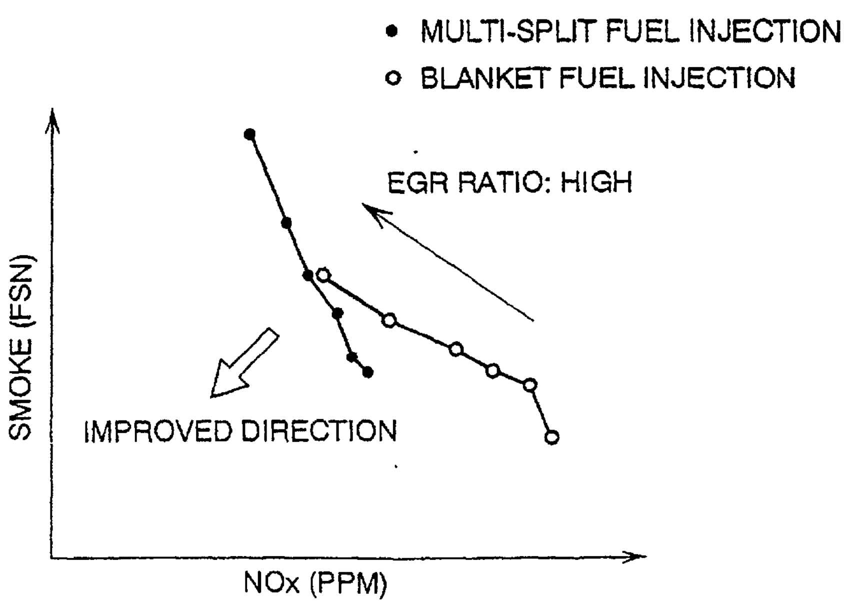
● MULTI-SPLIT FUEL INJECTION
○ BLANKET FUEL INJECTION
EGR RATIO: HIGH
SMOKE (FSN)
IMPROVED DIRECTION
NOx (PPM)

FIG. 21

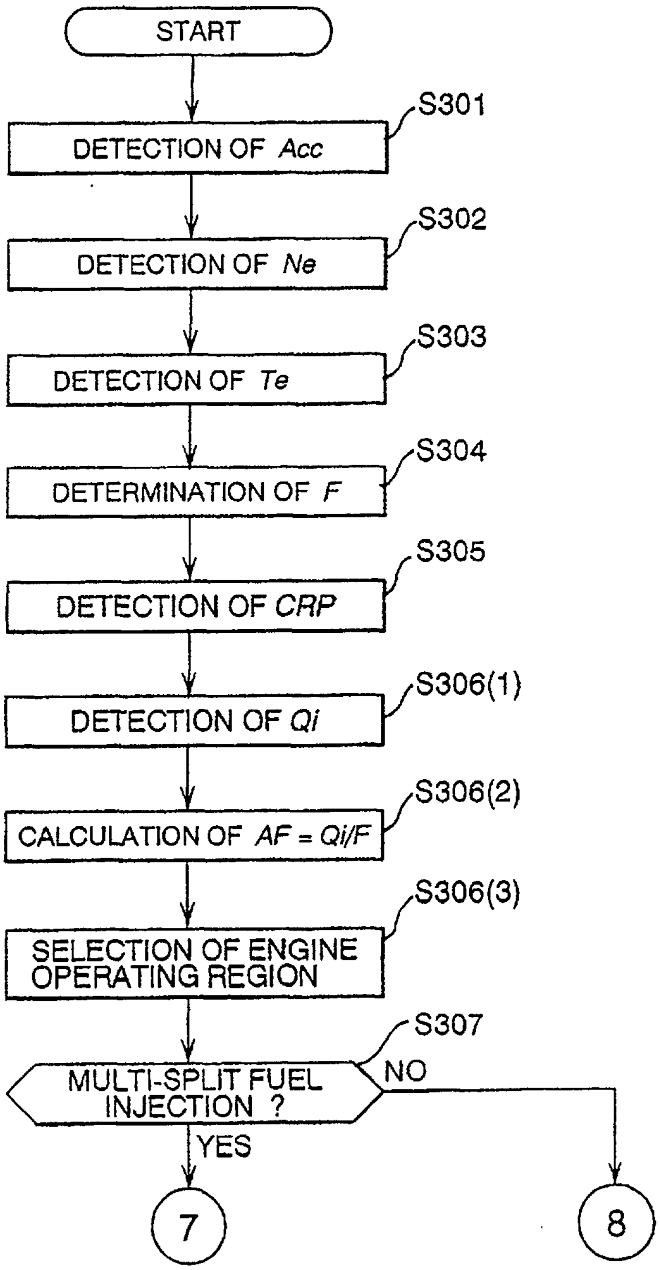
START
S301
DETECTION OF Acc
S302
DETECTION OF Ne
S303
DETECTION OF Te
S304
DETERMINATION OF F
S305
DETECTION OF CRP
S306(1)
DETECTION OF Qi
S306(2)
CALCULATION OF AF = Qi/F
S306(3)
SELECTION OF ENGINE OPERATING REGION
S307
MULTI-SPLIT FUEL INJECTION ?
NO
YES
7
8

FIG. 20

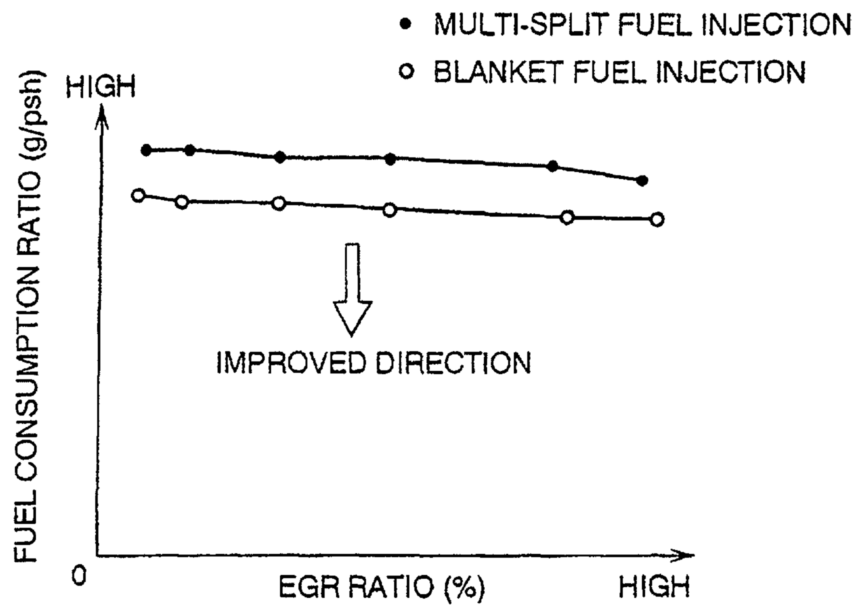
MULTI-SPLIT FUEL INJECTION
BLANKET FUEL INJECTION
HIGH
FUEL CONSUMPTION RATIO (g/psh)
IMPROVED DIRECTION
0
EGR RATIO (%)
HIGH

FIG. 22

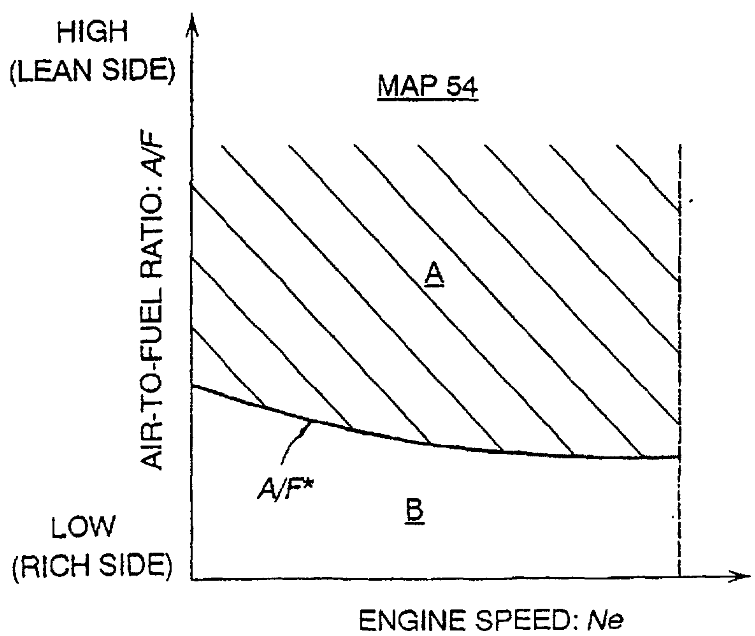
HIGH
(LEAN SIDE)
MAP 54
AIR-TO-FUEL RATIO: A/F
A
A/F*
B
LOW
(RICH SIDE)
ENGINE SPEED: Ne

FIG. 23

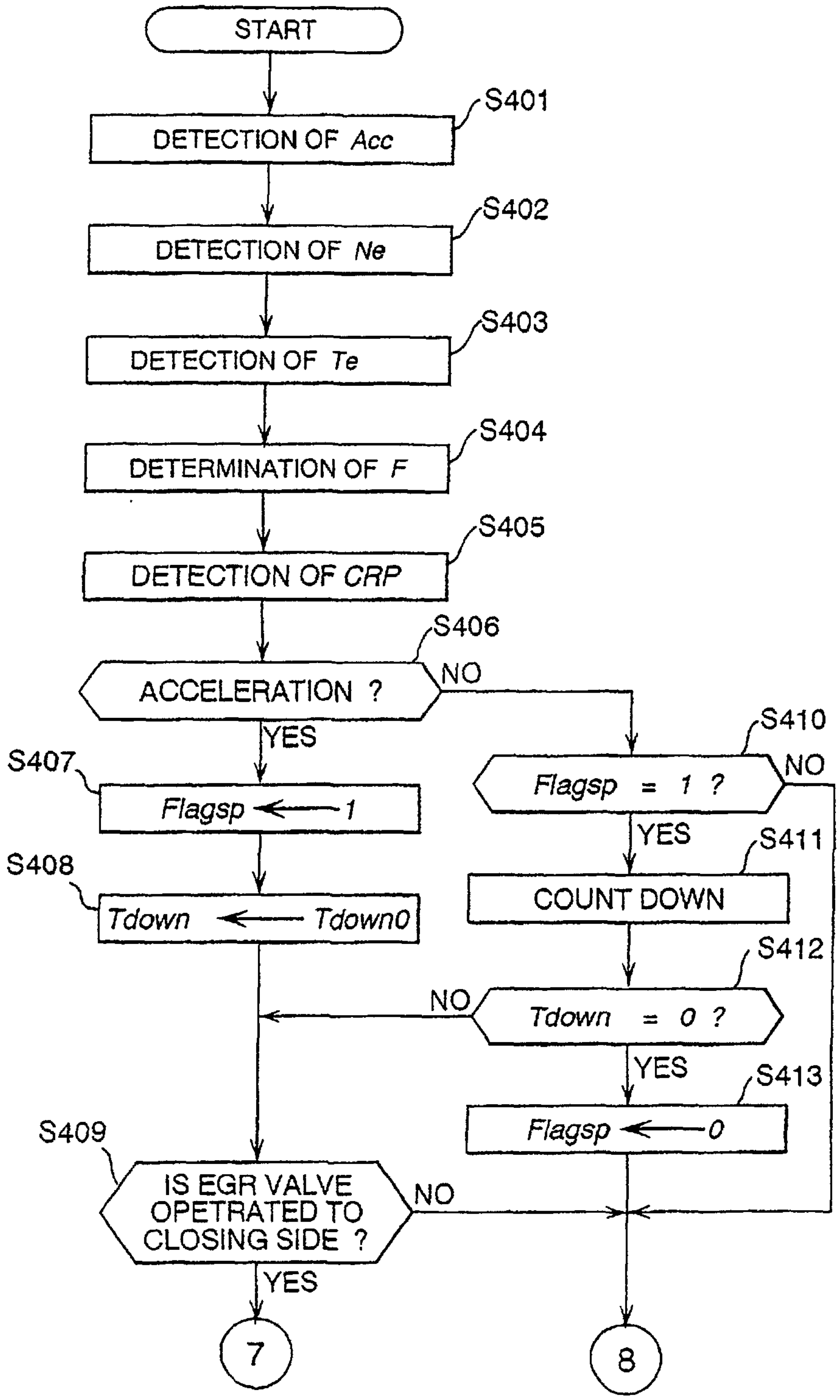
START
S401
DETECTION OF Acc
S402
DETECTION OF Ne
S403
DETECTION OF Te
S404
DETERMINATION OF F
S405
DETECTION OF CRP
S406
ACCELERATION ?
NO
YES
S407
Flagsp ← 1
S408
Tdown ← Tdown0
S410
Flagsp = 1 ?
NO
YES
S411
COUNT DOWN
S412
Tdown = 0 ?
NO
YES
S413
Flagsp ← 0
S409
IS EGR VALVE OPETRATED TO CLOSING SIDE ?
NO
YES
7
8

FIG. 24

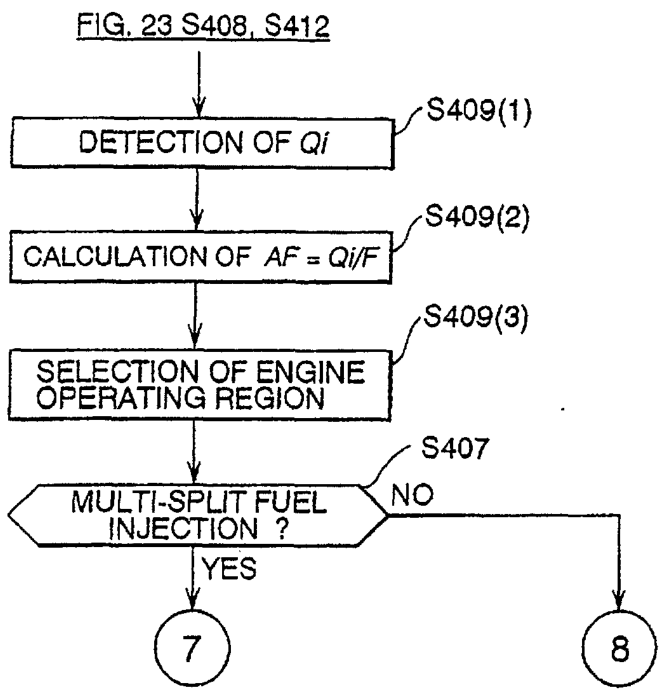
FIG. 23 S408, S412
DETECTION OF Qi
S409(1)
CALCULATION OF AF = Qi/F
S409(2)
SELECTION OF ENGINE OPERATING REGION
S409(3)
MULTI-SPLIT FUEL INJECTION ?
S407
NO
YES
7
8

FIG. 25

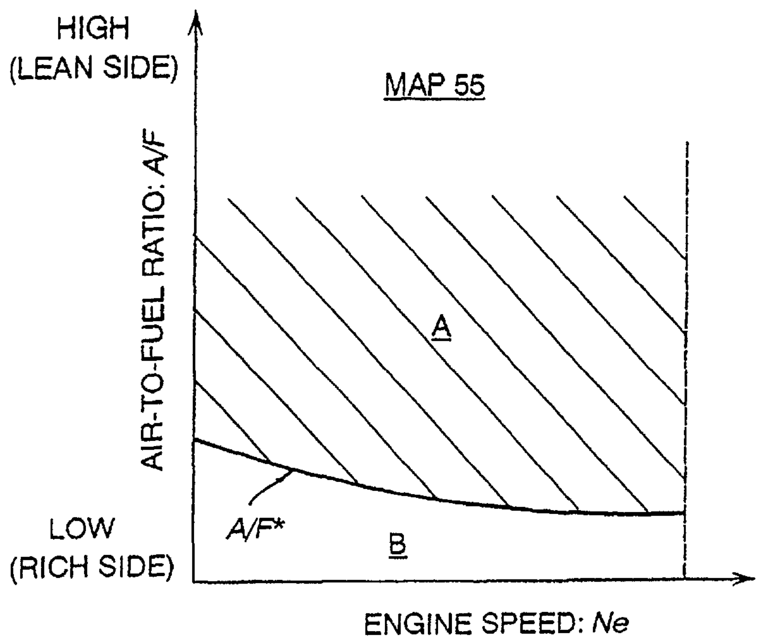
HIGH
(LEAN SIDE)
MAP 55
AIR-TO-FUEL RATIO: A/F
A
A/F*
B
LOW
(RICH SIDE)
ENGINE SPEED: Ne